# EUROPEAN PATENT APPLICATION

(11) **EP 4 834 952 A1**
(43) Date of publication of application: **04.11.2026**
(21) Application number: 24913055.0
(22) Date of filing: 26.12.2024
(51) Int. Cl.: C08C 19/02, B60C 1/00, C08C 19/25, C08F 236/10, C08F 297/04, C08K 3/06, C08K 3/36, C08L 15/00, C08L 53/02

(54) **CONJUGATED DIENE-BASED POLYMER, POLYMER COMPOSITION, CROSSLINKED BODY, AND TIRE**

(30) Priority: 27.12.2023 JP 2023221073
(71) Applicant: ENEOS Materials Corporation, Tokyo 105-7109 (JP)
(72) Inventor: NAKAHAMA, Tatsumoto, Tokyo 105-7109 (JP); SENGA, Hirofumi, Tokyo 105-7109 (JP); SANO, Takuya, Tokyo 105-7109 (JP); FUKUMOTO, Takato, Tokyo 105-7109 (JP); OONO, Noriyoshi, Tokyo 105-7109 (JP)
(74) Representative: TBK
(86) International application number: PCT/JP2024/046274
(87) International publication number: WO 2025/143169

(57) **Abstract**

A conjugated diene-based polymer includes a structural unit derived from butadiene and a structural unit derived from an aromatic vinyl compound, wherein: the value α defined by numerical formula (i) is 0.60 to 0.97; the relative amount of the structural unit derived from the aromatic vinyl compound is 5 mass% to 50 mass%; and the value θst, calculated from a ¹H-NMR spectrum as measured in deuterated chloroform as a solvent and by numerical formula (ii) is greater than 4 mass% and less than 27 mass%. Numerical formula (i): α = (p + (0.5×r))/(p + q + (0.5×r) + s); Numerical formula (ii); θst = [(Σ(a)/Σ(a, b))×2.5]×100 (In numerical formula (ii), Σ(a) represents an integral value in a chemical shift range of 6.00≤σ<6.89, and Σ(a,b) represents an integral value in a chemical shift range of 6.00≤σ≤8.00).

## Description

### Technical Field

### [Cross-Reference to Related Applications]

The present application claims a priority from Japanese Patent Application No. 2023-221073 filed on December 27, 2023, the entirety of the disclosures of which is incorporated herein by reference.

The present disclosure relates to a conjugated diene-based polymer, to a polymer composition, to a cross-linked product, and to a tire.

### Background Art

Conjugated diene-based polymers produced through polymerization of a conjugated diene compound are excellent in terms of a variety of properties including heat resistance, wear resistance, mechanical strength, and moldability, and thus widely used in various industrial materials such as pneumatic tires, vibration-proof rubbers, and hoses. Also, there has been proposed use of a hydrogenated conjugated diene-based polymer in which the unsaturated bonds of the corresponding conjugated diene-based polymer have been partially hydrogenated, to thereby yield a vulcanized rubber having high mechanical strength and wear resistance (see, for example, Patent Documents 1 and 2).

Patent Documents 1 and 2 also propose use of a hydrogenated product of a conjugated diene-based polymer having a functional group such as an amino group or an alkoxysilyl group at one end or both ends, to thereby yield a tire member having high mechanical strength and excellent wear resistance.

### Prior Art Documents

### Patent Documents

Patent Document 1: WO 2014/133097
Patent Document 2: WO 2015/064646

### Summary of the Invention

### Problems to be Solved by the Invention

Characteristics required for rubbers for producing automotive tires include rolling resistance, mechanical strength, and wet grip performance. Under recent circumstances and in accordance with increasing consumer's consciousness to saving resource and energy, the rolling resistance and mechanical strength of the rubber for automotive tires are required to be further improved so as to achieve good automotive fuel cost, which is further demanded as compared with conventional levels. Also, in order to enhance productivity, suitable processability of the rubber material is required.

The present disclosure has been conceived to solve the aforementioned problems, and a main object of the disclosure is to provide a conjugated diene-based polymer that can yield a cross-linked product which achieves suitable processability of a polymer composition and which exhibits improved rolling resistance, mechanical strength, and wet grip performance, in a well-balanced manner.

### Means for Solving the Problems

The present inventors have conducted extensive studies to solve the aforementioned problems, and have found that the aforementioned problems can be solved by a conjugated diene-based polymer having a particular structure. Accordingly, the present disclosure provides the following conjugated diene-based polymer, polymer composition, cross-linked product, and tire.
[1] A conjugated diene-based polymer including a structural unit derived from butadiene and a structural unit derived from an aromatic vinyl compound, wherein, when the proportions by mole of a structural unit represented by the following formula (1), a structural unit represented by the following formula (2), a structural unit represented by the following formula (3), and a structural unit represented by the following formula (4): 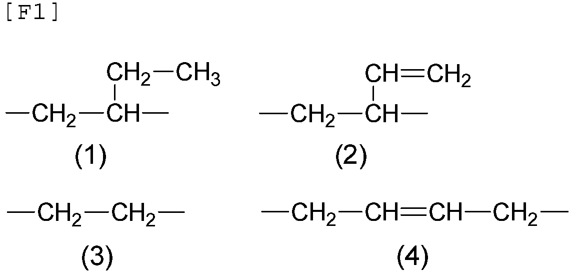 in the polymer, are represented by p, q, r, and s, respectively, the value α defined by the following numerical formula (i): $α = \left(p+\left(0.5\times r\right)\right) / \left(p+q+\left(0.5\times r\right)+s\right)$ (i), is 0.60 to 0.97; the relative amount of the structural unit derived from the aromatic vinyl compound is 5 mass% to 50 mass%; and the value θst, calculated from a ¹H-NMR spectrum as measured in deuterated chloroform as a solvent and by the following numerical formula (ii): $θst = \left[\left(\sum \left(a\right) / \sum \left(a, b\right)\right)\times 2.5\right] \times 100$ (ii) (wherein Σ(a) represents an integral value in a chemical shift range of 6.00≤σ<6.89, and Σ(a,b) represents an integral value in a chemical shift range of 6.00≤σ≤8.00), is greater than 4 mass% and less than 27 mass%.
[2] A polymer composition comprising a conjugated diene-based polymer as recited in [1] above, and an antioxidant.
[3] A cross-linked product formed by cross-linking of a polymer composition as recited in [2] above.
[4] A tire having a cap tread and a sidewall, wherein one or both of the cap tread and the sidewall is formed of a cured product of a polymer composition as recited in [2] above. Advantageous Effects of the Invention

According to the present disclosure, there can be yielded a conjugated diene-based polymer that can provide a polymer composition having suitable processability and that can provide a cross-linked product which exhibits improved rolling resistance, mechanical strength, and wet grip performance, in a well-balanced manner.

### Modes for Carrying Out the Invention

Hereinafter, the elements in relation to carrying out the present disclosure will be described in detail. In the present specification, a numerical range expressed with "X to Y" refers to a range defined by X as a lower limit and Y as an upper limit. Notably, unless otherwise specified, each component may be used singly or in combination of two or more species.

### <<Conjugated diene-based polymer>>

The conjugated diene-based polymer of the present disclosure (hereinafter may also be referred to as a "conjugated diene-based polymer (A)") includes a structural unit derived from butadiene (more specifically, 1,3-butadiene) and a structural unit derived from an aromatic vinyl compound. In the conjugated diene-based polymer (A), when the proportions by mole of a structural unit represented by the following formula (1), a structural unit represented by the following formula (2), a structural unit represented by the following formula (3), and a structural unit represented by the following formula (4): 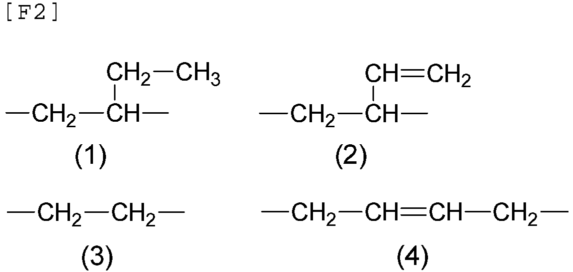 in the polymer, are represented by p, q, r, and s, respectively, the value α defined by the following numerical formula (i): $α = \left(p+\left(0.5\times r\right)\right) / \left(p+q+\left(0.5\times r\right)+s\right)$ (i), is 0.60 to 0.97.

When the value α represented by the above numerical formula (i) is less than 0.60, a cross-linked product obtained from the conjugated diene-based polymer tends to exhibit insufficient wear resistance, whereas when the α is in excess of 0.97, vulcanization bonding performance tends to decrease. From the viewpoint of yielding a cross-linked product having improved wear resistance and vulcanization bonding performance in a well-balanced manner, α is preferably 0.65 or greater, more preferably 0.70 or greater, still more preferably 0.75 or greater. Also, α is preferably 0.96 or less, more preferably 0.95 or less.

Notably, the value α represented by the above numerical formula (i) corresponds to a percent hydrogenation of the conjugated diene-based polymer. For example, when α is 0.60, the percent hydrogenation of the conjugated diene-based polymer is 60%. The percent hydrogenation and α of the conjugated diene-based polymer may be controlled by, for example, modifying the time of hydrogenation reaction for forming the conjugated diene-based polymer (A), regulating the integrated amount of hydrogen supplied, or the like. As used herein, the percent hydrogenation is determined by means of a ¹H-NMR apparatus.

The conjugated diene-based polymer (A) is a mass of a polymer including a structural unit derived from butadiene and a structural unit derived from an aromatic vinyl compound. Hereinafter, the structural unit derived from butadiene may also be referred to simply as a "butadiene unit", and the structural unit derived from an aromatic vinyl compound may also be referred to simply as a "aromatic vinyl unit".

Examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, vinylxylene, vinylnaphthalene, vinylpyridine, diphenylethylene, and tertiary-amino group-containing diphenylethylene (e.g., 1-(4-N,N-dimethylaminophenyl)-1-phenylethylene). As the aromatic vinyl compound, styrene and α-methylstyrene are preferred. Also, styrene is preferred, from the viewpoint of achieving high living performance in anionic polymerization in the case of copolymerization with 1,3-butadiene.

In the conjugated diene-based polymer (A), the relative amount of the aromatic vinyl unit is 5 mass% to 50 mass%. When the aromatic vinyl unit content is lower than 5 mass%, processability of a polymer composition containing the conjugated diene-based polymer, mechanical strength of a cross-linked product formed from the polymer, and wet grip performance tends to decrease, whereas when the aromatic vinyl unit content exceeds 50 mass%, rolling resistance of the cross-linked product tends to be unsatisfactory. From the viewpoint of achieving improved processability of a polymer composition containing the conjugated diene-based polymer and mechanical strength of a cross-linked product formed from the polymer, as well as rolling resistance and wet grip performance, in a well-balanced manner, the relative amount of the aromatic vinyl unit, with respect to the total amount of the structural units included in the conjugated diene-based polymer (A), is preferably 10 mass% or more, more preferably 15 mass% or more, still more preferably 20 mass% or more, yet more preferably 25 mass% or more. Also, the relative amount of the aromatic vinyl unit, with respect to the total amount of the structural units included in the conjugated diene-based polymer (A), is preferably 48 mass% or less, more preferably 45 mass% or less, still more preferably 40 mass% or less. Notably, the aromatic vinyl unit content of the conjugated diene-based polymer is determined through ¹H-NMR.

A preferred range of the aromatic vinyl unit content of the conjugated diene-based polymer (A) may be determined through appropriately combining the aforementioned upper limit and lower limit. Specifically, the aromatic vinyl unit content of the conjugated diene-based polymer (A) is preferably 10 mass% to 48 mass%, more preferably 15 mass% to 45 mass%, still more preferably 20 mass% to 45 mass%.

The conjugated diene-based polymer (A) exhibits a value θst, calculated from a ¹H-NMR spectrum as measured in deuterated chloroform as a solvent and by the following numerical formula (ii): $θst = \left[\left(\sum \left(a\right) / \sum \left(a, b\right)\right)\times 2.5\right] \times 100$ (ii) (wherein Σ(a) represents an integral value in a chemical shift range of 6.00≤σ<6.89, and Σ(a,b) represents an integral value in a chemical shift range of 6.00≤σ≤8.00), of greater than 4 mass% and less than 27 mass%.

In a ¹H-NMR spectrum of the conjugated diene-based polymer (A) as measured in deuterated chloroform as a solvent, a chemical shift in response to the number of continuously linked aromatic vinyl units (hereinafter may also be referred to as an "aromatic vinyl chain length"). Specifically, the state of the aromatic vinyl unit chain in the conjugated diene-based polymer (A) can be grasped by the ratio of the integral value in the following range (a) to the sum of the integral values in the chemical shift ranges of the following (a) to (c):
(a) a chain of ≥8 aromatic vinyl compound units: 6.00≤S<6.68;
(b) a chain of 2 to 7 aromatic vinyl compound units: 6.68≤S<6.89; and
(c) a short chain of aromatic vinyl compound units: 6.89≤S≤8.00.

In the description of the (a) to (c), S represents a chemical shift (unit: ppm)). The term "short chain of aromatic vinyl compound units" refers to the presence of an aromatic vinyl unit intervening between butadiene units.

For example, in the case of the aromatic vinyl compound is styrene, the relative amount of the chain including 8 or more continuous styrene units in the styrene units forming the conjugated diene-based polymer (A) can be calculated by calculating the ratio of the integral value in the chemical shift range (a) to the sum of the integral values in the chemical shift ranges of the (a) to (c), and multiplying the ratio by 2.5.

When the θst of the conjugated diene-based polymer (A) is 4 mass% or less or greater than 27 mass%, processability of a polymer composition, and the mechanical strength and wet grip performance of the cross-linked product produced from the conjugated diene-based polymer (A) tend to decrease. From the viewpoint of successfully yielding the conjugated diene-based polymer (A) which provides a polymer composition containing the polymer with excellent processability, while a cross-linked product which exhibits suitable rolling resistance, mechanical strength, and wet grip performance is formed, θst is preferably 5 mass% or greater, more preferably 7 mass% or greater, still more preferably 10 mass% or greater. Also, from the viewpoint of suppressing a drop in mechanical strength of the cross-linked product, θst is preferably 24 mass% or less, more preferably 20 mass% or less.

A preferred range of the θst of the conjugated diene-based polymer (A) may be determined through appropriately combining the aforementioned upper limit and lower limit. Specifically, the θst of the conjugated diene-based polymer (A) is preferably 5 mass% to 24 mass%, more preferably 7 mass% to 24 mass%, still more preferably 10 mass% to 20 mass%.

The conjugated diene-based polymer (A) may be a molecular assembly of a polymer having a linear-chain form (hereinafter may also be referred to as a "linear-chain polymer"), or a molecular assembly of a polymer having a branched structure (hereinafter may also be referred to as a "branched polymer"), or may include a linear-chain polymer with a branched polymer. From the viewpoint of yielding a cross-linked product which exhibits suitable wet grip performance and more excellent wear resistance, the conjugated diene-based polymer (A) preferably includes a branched polymer, more preferably a polymer having a multi-branch structure (i.e., with 4 or more molecular chains) (hereinafter may also be referred to as a "polymer (A1)").

The relative amount of the polymer (A1) in the conjugated diene-based polymer (A), with respect to the total amount of the conjugated diene-based polymer (A), is preferably 15 mass% to 75 mass%. When the polymer (A1) content falls within the above range, processability of a polymer composition containing the conjugated diene-based polymer (A) can be maintained at a suitable level. From the viewpoint of improving rolling resistance and mechanical strength of a cross-linked product obtained from the composition, while maintaining the processability of the polymer composition at a suitable level, the relative amount of the polymer (A1) in the conjugated diene-based polymer (A), with respect to the total amount of the conjugated diene-based polymer (A), is more preferably 18 mass% or more, still more preferably 20 mass% or more. Also, the relative amount of the polymer (A1) in the conjugated diene-based polymer (A), with respect to the total amount of the conjugated diene-based polymer (A), is more preferably 70 mass% or less, still more preferably 65 mass% or less, yet more preferably 60 mass% or less. Notably, the relative amount (mass%) of the polymer (A1) in the conjugated diene-based polymer (A) can be calculated by isolating a wave component attributed to a branched polymer in the GPC curve obtained through gel permeation chromatography (GPC).

A preferred range of the polymer (A1) content of the conjugated diene-based polymer (A) may be determined through appropriately combining the aforementioned upper limit and lower limit. Specifically, the polymer (A1) content of the conjugated diene-based polymer (A) is more preferably 18 mass% to 70 mass%, still more preferably 20 mass% to 65 mass%.

Next, the technical features of the conjugated diene-based polymer (A) will be described in detail, along with the method for producing the conjugated diene-based polymer (A). The conjugated diene-based polymer (A) may be produced through, for example, a method which includes the below-described polymerization step and hydrogenation step, and optionally includes the below-mentioned reaction step before the hydrogenation step and after the polymerization step.
Polymerization step: a step of polymerizing monomers including 1,3-butadiene and an aromatic vinyl compound, to thereby form a conjugated diene-based polymer having an active end
Reaction step: a step of reacting the conjugated diene-based polymer having an active end with a compound having 4 or more functional groups that can react with the active end of the conjugated diene-based polymer (hereinafter may also be referred to as a "coupling agent (B)")
Hydrogenation step: a step of conducting hydrogenation of the conjugated diene-based polymer (hereinafter may also be referred to simply as "hydrogenation")

Hereinafter, the conjugated diene-based polymer produced in the polymerization step may also be referred to as a "conjugated diene-based polymer (I)", and the conjugated diene-based polymer produced in the reaction step may also be referred to as a "conjugated diene-based polymer (II)". Hereinafter, the steps will be described.

### <Polymerization step>

In the polymerization reaction for producing the conjugated diene-based polymer (A), only 1,3-butadiene and an aromatic vinyl compound may be used as monomers. Alternatively, a compound other than 1,3-butadiene or an aromatic vinyl compound (hereinafter may also be referred to as an "additional monomer") may be used in combination. Examples of the additional monomer include a conjugated diene compound (other than 1,3-butadiene), acrylonitrile, methyl (meth)acrylate, and ethyl (meth)acrylate. Examples of the conjugated diene compound other than 1,3-butadiene include isoprene, 2,3-dimethyl-1,3-butadiene, 1,3-pentadiene, and 1,3-hexadiene. The amount of the additional monomer used, with respect to the total amount of the monomers used in polymerization, is preferably adjusted to 10 mass% or less, more preferably 5 mass% or less.

The method which is employed may be any of solution polymerization, gas phase polymerization, emulsion polymerization and bulk polymerization. Among them, the polymerization employed is particularly preferably solution polymerization. Also, the polymerization method may be performed in a batch manner or in a continuous manner. When solution polymerization is employed, one specific procedure includes polymerization of monomers including 1,3-butadiene and an aromatic vinyl compound in an organic solvent in the presence of a polymerization initiator and an optional randomizer (i.e., a vinyl content-modifying agent).

As the polymerization initiator, a metal compound containing an alkali metal or an alkaline earth metal may be used. Among such metal compounds, an alkali metal-containing compound is preferred. Specific examples of the metal compound include alkyllithiums such as methyllithium, ethyllithium, n-propyllithium, n-butyllithium, sec-butyllithium, and t-butyllithium; and other compounds such as 1,4-dilitiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, and ethoxypotassium. Among them, the polymerization initiator is preferably a lithium compound.

Alternatively, the metal compound used as the polymerization initiator may be a metal amide compound containing an alkali metal or an alkaline earth metal. When polymerization for forming the conjugated diene-based polymer (A) is conducted in the presence of a metal amide compound, an amino group can be incorporated into a polymerization initiation end of the conjugated diene-based polymer (e.g., a free end of a branched polymer). The amino group incorporated into a polymerization initiation end of the conjugated diene-based polymer is preferably a secondary amino group or a tertiary amino group. The conjugated diene-based polymer (A) yielded through polymerization in the presence of a metal amide compound is preferred, from the viewpoint of suitable processability of the polymer composition, while excellent mechanical strength and wear resistance of the cross-linked product are achieved.

Among metal amide compounds, a compound obtained by mixing a lithium compound (e.g., alkyllithium) with a compound containing a nitrogen atom (hereinafter may also be referred to as an "initiation terminal modifier") is preferred. The initiation terminal modifier is preferably a secondary amine compound. Specific examples thereof include dimethylamine, diethylamine, dipropylamine, dibutylamine, dodecamethylenimine, N,N'-dimethyl-N'-trimethylsilyl-1,6-diaminohexane, piperidine, pyrrolidine, hexamethylenimine, heptamethylenimine, dicyclohexylamine, N-methylbenzylamine, di-(2-ethylhexyl)amine, diallylamine, morpholine, N-(trimethylsilyl)piperazine, N-(tert-butyldimethylsilyl)-4-piperazine, and 1,3-ditrimethylsilyl-1,3,5-triazinane.

Notably, when polymerization is conducted in the presence of a metal amide compound, a lithium compound and an initiation terminal modifier may be mixed together in advance, to thereby prepare a metal amide compound, and the thus-prepared metal amide compound may be added to the polymerization system for conducting polymerization. Alternatively, both a lithium compound and an initiation terminal modifier may be added to the polymerization system, and the two components may be mixed in the polymerization system, to thereby prepare a metal amide compound for conducting polymerization. In the above polymerization, the amount of polymerization initiator (the total amount, when two or more species are used) is preferably 0.01 to 20 mmol, more preferably 0.05 to 15 mmol, with respect to 100 g of the monomer(s) involved in synthesis of the polymer.

The randomizer may be used for the purpose of adjusting the vinyl bond content (i.e., vinyl bond content of a polymer) and other reasons. Examples of the randomizer include ether compounds such as dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane; amine compounds such as triethylamine, pyridine, N-methylmorpholine, and tetramethylethylenediamine; and potassium compounds such as potassium alkoxide, potassium phenoxide, a potassium organic carboxylate salt, a potassium organic sulfonate salt (e.g., potassium dodecylbenzenesulfonate), and a potassium organic phosphite.

In polymerization, by adding a potassium compound with the polymerization initiator, the length of the aromatic vinyl chain (i.e., θst) can be regulated. For example, when a polymerization initiator is added with potassium compound to the polymerization system, there can be regulated random arrangement of the aromatic vinyl compound incorporated into the conjugated diene-based polymer (A), and provision of a short chain of the aromatic vinyl compound. As a result, the relative length of the aromatic vinyl chain (the length of the styrene chain, when styrene is used) in the conjugated diene-based polymer (A) can be regulated to fall within a range of interest.

As the organic solvent employed in polymerization, an organic solvent which is not involved in polymerization reaction is preferably used. For example, a chain or cyclic aliphatic hydrocarbon, an aromatic hydrocarbon, or the like may be used as the organic solvent employed in polymerization. Among them, a C3 to C8 hydrocarbon is preferred. Specific examples include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene.

When solution polymerization is conducted, the monomer concentration of the reaction solvent is preferably 5 to 50 mass%, more preferably 10 to 30 mass%, from the viewpoint of maintaining productivity and facility in controlling polymerization and attaining the balance therebetween. The temperature of polymerization reaction is preferably -20°C to 150°C, more preferably 0 to 120°C. Also, the polymerization reaction is preferably conducted at such a pressure sufficiently maintaining the monomers substantially in a liquid phase. Such pressure can be achieved through, for example, a method including pressurizing a reactor with a gas which is not involved in polymerization reaction. Through such polymerization reaction, a conjugated diene-based polymer having an active end (i.e., the conjugated diene-based polymer (I)) can be yielded.

In the conjugated diene-based polymer (I) obtained through the aforementioned polymerization, the vinyl bond content of the structural unit derived from 1,3-butadiene is preferably 5 to 70 mol%. By adjusting the vinyl bond content to be 5 mol% or higher, the produced cross-linked product tends to be provided with consistent flexibility and suitable processability. The vinyl bond content of the conjugated diene-based polymer (I) is more preferably 10 mol% or higher, still more preferably 15 mol% or higher, yet more preferably 20 mol% or higher. Also, the vinyl bond content of the conjugated diene-based polymer (I) is more preferably 60 mol% or lower, still more preferably 50 mol% or lower, from the viewpoint of securing rolling resistance of a cross-linked product, while processability of a polymer composition containing the conjugated diene-based polymer (A) is maintained. As used herein, the term "vinyl bond content" refers to a ratio of a structural unit having a 1,2-bond contained in the conjugated diene-based polymer before hydrogenation to the all the structural units derived from 1,3-butadiene. The vinyl bond content is determined by means of a ¹H-NMR apparatus.

The vinyl bond content of the conjugated diene-based polymer (A) before hydrogenation is as follows. That is, when the compositional proportions in the polymer by mole of a structural unit represented by the above formula (1), a structural unit represented by the above formula (2), a structural unit represented by the above formula (3), and a structural unit represented by the above formula (4) included in the conjugated diene-based polymer (A) are represented by p, q, r, and s, respectively, the vinyl bond content of the conjugated diene-based polymer (A) is a value β × 100, β being represented by the following numerical formula (iii): $β = \left(p+q\right) / \left(p+q+\left(0.5\times r\right)+s\right)$ (iii).

Notably, the conjugated diene-based polymer (A) before hydrogenation typically satisfies p=0 and r=0.

In other words, the value β represented by the above numerical formula (iii) corresponds to the vinyl bond content of the conjugated diene-based polymer before hydrogenation. For example, when β of the conjugated diene-based polymer (A) is 0.05, the vinyl bond content of the conjugated diene-based polymer before hydrogenation is 5 mol%. In order to attain both processability of a polymer composition containing conjugated diene-based polymer (A) and rolling resistance of a cross-linked product obtained from the polymer (A), β of the conjugated diene-based polymer (A) is preferably 0.05 to 0.70. The value β is more preferably 0.10 or greater, still more preferably 0.15 or greater, yet more preferably 0.20 or greater. Also, the value β is more preferably 0.60 or less, still more preferably 0.50 or less.

A preferred range of the value β of the conjugated diene-based polymer (A) may be determined through appropriately combining the aforementioned upper limit and lower limit. Specifically, the value β of the conjugated diene-based polymer (A) is preferably 0.10 to 0.60, more preferably 0.15 to 0.60, still more preferably 0.20 to 0.50.

### <Reaction step>

Examples of the coupling agent (B) used in the reaction step include a compound which has 4 or more reaction points with the active end of the conjugated diene-based polymer and which contains at least one element selected from the group consisting of nitrogen, oxygen, sulfur, silicon, titanium, and tin.

Specific examples of the coupling agent (B) are as follows. Specific examples of such a compound containing silicon, titanium, or tin include tetrachlorosilane (silicon tetrachloride), tetramethoxysilane, bis(trichlorosilyl)ethane, tetrachlorotitanium, and tetrachlorotin.

Alternatively, there may be used, as the coupling agent (B), a compound which has a functional group containing at least one element selected from the group consisting of nitrogen, oxygen, and sulfur and which has 4 or more reaction sites with the polymer chain yielded in the aforementioned polymerization step (hereinafter may also be referred to as a "terminal modifier (b1)"). By use of the terminal modifier (b1), there can be yielded a polymer to which a functional group containing at least one element selected from the group consisting of nitrogen, oxygen, and sulfur has been incorporated into a branching node of the branched polymer. Specific examples of the terminal modifier (b1) include compounds as recited in paragraphs 0029 to 0035 of WO 2020/196899, and compounds as recited in paragraphs 0030 to 0033 of WO 2020/179705.

The reaction between the conjugated diene-based polymer (I) and the coupling agent (B) (i.e., coupling reaction) is preferably preformed as solution-format reaction. The amount of the coupling agent (B) to be used (the total amount, when two or more species are used) may be appropriately set so that the polymer (A1) content of the conjugated diene-based polymer (A) falls within a range of interest. Specifically, from the viewpoint of yielding a cross-linked product exhibiting excellent wear resistance, while suitable processability of the polymer composition is maintained, the amount of the coupling agent (B) to be used, with respect to 1 mol of metal atoms which are involved in polymerization and which are contained in the polymerization initiator (i.e., a metal compound), is preferably 0.01 mol or more, more preferably 0.05 mol or more. Also, from the viewpoint of suppressing a drop in processability of the polymer composition, the amount of the coupling agent (B) to be used, with respect to 1 mol of metal atoms which are included in the polymerization initiator and which is involved in polymerization, is preferably 0.7 mol or less, more preferably 0.5 mol or less.

The reaction temperature in the coupling reaction is generally the same as that employed in polymerization reaction and is preferably -20°C to 150°C, more preferably 0 to 120°C. When the reaction temperature is low, the viscosity of the polymer after reaction tends to increase, whereas when the reaction temperature is high, polymerization active ends are easily deactivated. The reaction time is preferably 1 minute to 5 hours, more preferably 2 minutes to 1 hour.

Through the aforementioned coupling reaction, the conjugated diene-based polymer (II) can be produced. The conjugated diene-based polymer (II) preferably includes a polymer having a ≥4 branching molecular chain (i.e., the polymer (A1) before hydrogenation) and a linear-chain polymer or a branched polymer having a ≤3 branching molecular chain. Among the polymers included in the conjugated diene-based polymer (I), the linear-chain polymer or the branched polymer having a ≤3 branching molecular chain is mainly an unreacted polymer which has not reacted with the coupling agent (B). In the conjugated diene-based polymer (II), the ratio of the polymer having a multi-branch structure (i.e., ≥4 branching molecular chain) (i.e., the polymer (A1) before hydrogenation) to the linear-chain polymer or the branched polymer having a ≤3 branching molecular chain may be appropriately set by controlling the amount of the coupling agent (B) to be used, the number of functional groups of the coupling agent (B) to be used, etc. so that the ratio of the polymer (A1) to the linear-chain polymer or the branched polymer having a ≤3 branching molecular chain, in the conjugated diene-based polymer (A), are adjusted to values of interest.

Notably, isolation of the conjugated diene-based polymer from the reaction solution may be performed through a known solvent removal method (e.g., steam stripping) and drying such as heat treatment.

### <Modification step>

The above-produced conjugated diene-based polymer (II) may be used as is in the subsequent hydrogenation step. Before conducting the hydrogenation step, there may be conducted a treatment of reacting a polymerization termination end of the linear-chain polymer included in the conjugated diene-based polymer (II) with a terminal modifier (referred to as a "terminal modifier (c)"). As the terminal modifier (c), there is preferably used a compound which has at least one element selected from the group consisting of nitrogen, oxygen, phosphorus, silicon, and sulfur and which can react with an active end of the linear-chain polymer. In this case, a linear-chain polymer or a branched polymer having a ≤3 branching molecular chain having a functional group containing at least one element selected from the group consisting of nitrogen, oxygen, phosphorus, silicon, and sulfur can be incorporated into the conjugated diene-based polymer (A). In other words, by conducting the subsequent hydrogenation step, the conjugated diene-based polymer (A) having a functional group containing at least one element selected from the group consisting of nitrogen, oxygen, phosphorus, silicon, and sulfur can be yielded. In addition, by incorporating a functional group containing at least one element selected from the group consisting of nitrogen, oxygen, phosphorus, silicon, and sulfur into the conjugated diene-based polymer (A), rolling resistance of the cross-linked product produced from the conjugated diene-based polymer (A) can be enhanced. Notably, the terminal modifier (c) differs from the coupling agent (B) in that the number of reaction points with respect to the active end of the conjugated diene-based polymer (I) is 3 or smaller.

Specific examples of the functional group having at least one element selected from the group consisting of nitrogen, oxygen, phosphorus, silicon, and sulfur include a primary amino group, a secondary amino group, a tertiary amino group, a protected primary amino group, a protected secondary amino group, an imino group, a nitrogen-containing heterocyclic group (e.g., a group having a heterocycle such as a pyridine ring or an imide ring), a hydroxy group, a protected hydroxy group, a thiol group, a protected thiol group, a hydrocarbyloxysilyl group, and a phosphino group. From the viewpoint of achieving a high effect of improving wear resistance, the conjugated diene-based polymer (A) preferably has a functional group containing nitrogen (a nitrogen-containing group), particularly preferably at least one species selected from the group consisting of a primary amino group, a secondary amino group, a tertiary amino group, and an imino group.

Specific examples of preferred terminal modifiers (c) include at least one species selected from the group consisting of the compounds represented by the following formula (5) and the compounds represented by the following formula (6). 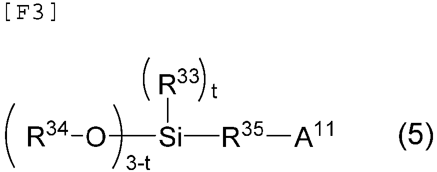 (In formula (5), A¹¹ represents a monovalent functional group which contains at least one element selected from the group consisting of nitrogen, oxygen, phosphorus, and sulfur but no active hydrogen and which is bound to R³⁵ via nitrogen, oxygen, phosphorus, sulfur, or a carbon atom included in a carbonyl group, or a (thio)epoxy group; each of R³³ and R³⁴ independently represents a hydrocarbyl group; R³⁵ represents a hydrocarbylene group; t is an integer of 0 to 2; when t is 2, a plurality of R³³s in the formula are identical to or different from one another; and when t is 0 or 1, a plurality of R³⁴s in the formula are identical to or different from one another.) 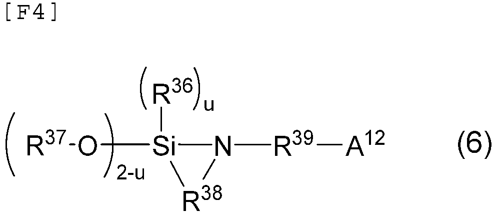 (In formula (6), A¹² represents a monovalent functional group which contains at least one element selected from the group consisting of nitrogen, oxygen, phosphorus, sulfur, and silicon, but no active hydrogen and which is bound to R³⁹ via nitrogen, oxygen, phosphorus, sulfur, or silicon, or a C1 to C20 hydrocarbyl group; R³⁹ represents a single bond or a hydrocarbylene group; each of R³⁶ and R³⁷ independently represents a hydrocarbyl group; R³⁸ represents a hydrocarbylene group; u is 0 or 1; and when u is 0, a plurality of R³⁷s are identical to or different from one another.)

In the above formulas (5) and (6), regarding R³³, R³⁴, R³⁶, R³⁷, and A¹² (in the case of a hydrocarbyl group), the hydrocarbyl group is preferably a C1 to C20 linear-chain or branched alkyl group, a C3 to C20 cycloalkyl group, or a C6 to C20 aryl group.

The hydrocarbylene group of R³⁵ or R³⁹ is preferably a C1 to C20 linear-chain or branched alkanediyl group, a C3 to C20 cycloalkylene group, or a C6 to C20 arylene group; and the hydrocarbylene group represented by R³⁸ is preferably a C1 to C20 linear-chain or branched alkanedily group.

The t is preferably 0 or 1.

In the case where A¹¹ is the aforementioned monovalent functional group, at least one element selected from the group consisting of nitrogen, phosphorus, oxygen, sulfur, and silicon present in A¹¹, and in the case where A¹² is the aforementioned monovalent functional group, at least one element selected from the group consisting of nitrogen, phosphorus, oxygen, sulfur, and silicon present in A¹², may be protected by, for example a tri-substituted hydrocarbylsilyl group or the like. Notably, as used herein, the term "active hydrogen" refers to a hydrogen atom which bonds to an atom other than a carbon atom. Preferably, the bond energy is lower than that of a carbon-hydrogen bond of polymethylene. The term "(thio)epoxy group" encompasses an epoxy group and a thioepoxy group.

A¹¹ may be a group that can provide an onium ion by an onium salt-forming agent. The presence of such a group (A¹¹) in the terminal modifier (c) can provide a polymer with excellent shape retaining property. Specific examples of A¹¹ include a nitrogen-containing group derived from a primary amino group by substituting two hydrogen atoms with two protective groups; a nitrogen-containing group derived from a secondary amino group by substituting one hydrogen atom with one protective group; a tertiary amino group; an imino group; a pyridyl group; a phosphorus-containing group derived from a primary phosphino group by substituting two hydrogen atoms with two protective groups; a phosphorus-containing group derived from a secondary phosphino group by substituting one hydrogen atom with one protective group; a tertiary phosphino group; an epoxy group; a thioepoxy group; a group derived from a hydroxy group by substituting the hydrogen with a protective group; a sulfur-containing group derived from a thiol group by substituting the hydrogen with a protective group; and a hydrocarbyloxycarbonyl group. Among them, from the viewpoint of good affinity with silica, a nitrogen-containing group is preferred, with a tertiary amino group and a nitrogen-containing group derived from a primary amino group by substituting two hydrogen atoms with two protective groups being more preferred. Notably, the term "protective group" refers to a functional group which can transform A¹¹ or A¹² to a functional group inert to a polymerization active end. As used herein, the term "onium salt-forming agent" refers to a Broensted acid or a compound which forms a Broensted acid upon contact with water.

Specific examples of the terminal modifier (c), as compounds represented by formula (5), include N,N-bis(trimethylsilyl)aminopropyltrimethoxysilane, N,N-dimethylaminopropyltriethoxysilane, N,N-bis(trimethylsilyl)aminopropylmethyldimethoxysilane, N,N',N'-tris(trimethylsilyl)-N-(2-aminoethyl)-3-aminopropyltriethoxysilane, 3-(4-trimethylsilyl-1-piperazino)propylmethyldimethoxysilane, 3-glycidoxypropylmethyldimethoxysilane, and 3-glycidoxypropyltriethoxysilane.

Specific examples of the compound represented by formula (6) include 2,2-dimethoxy-1-(3-trimethoxysilylpropyl)-1,2-azasilolydine, 2,2-diethoxy-1-(3-trimethoxysilylpropyl)-1,2-azasilolydine, 2,2-dimethoxy-1-phenyl-1,2-azasilolydine, 1-trimethylsilyl-2,2-dimethoxy-1-aza-2-silacyclopentane, 2-(2,2-dimethoxy-1,2-azasilolydin-1-yl)-N,N-diethylethan-1-amine, 2-(2,2-dimethoxy-1,2-azasilolydin-1-yl)-N,N-dimethylethan-1-amine, and 3-(2,2-dimethoxy-1,2-azasilolydin-1-yl)-N,N-diethylpropan-1-amine. The terminal modifier (c) may be used singly or in combination of two or more species.

The reaction between the conjugated diene-based polymer (II) and the terminal modifier (c) may be conducted as, for example, solution-format reaction. The solution-format reaction may be conducted in a batch manner or in a continuous manner. In this case, no particular limitation is imposed on the method of adding the terminal modifier (c). Examples of the addition method include a one-batch addition, a divided addition, and a continuous addition.

The amount of the terminal modifier (c) to be used may be appropriately set in accordance with the type of the compound(s) employed in the reaction. The amount of the terminal modifier (c) to be used is preferably 0.05 mol or more with respect to 1 mol of metal atoms present in the polymerization initiator involved in the polymerization reaction, more preferably 0.1 mol or more. By tuning the amount of the terminal modifier (c) to be used to 0.1 mol equivalents or more, modification reaction can be sufficiently proceeded, whereby dispersibility of inorganic fillers can be suitably improved. Also, the amount of the terminal modifier (c) is preferably 1.0 mol or less with respect to 1 mol of metal atoms present in the polymerization initiator involved in the polymerization reaction, more preferably 0.8 mol or less.

The temperature of end modification reaction is generally the same as the temperature of polymerization reaction, and is preferably -20 to 150°C, more preferably 0 to 120°C, still more preferably 20 to 100°C. When the modification reaction temperature is low, the viscosity of the polymer solution tends to increase, whereas when the modification reaction temperature is high, a polymerization active end is readily deactivated. The time of terminal modification reaction is preferably 1 minute to 5 hours, more preferably 2 minutes to 1 hour.

The coupling rate of the conjugated diene-based polymer produced via the reaction step and the modification step may be appropriately set in accordance with the polymer (A1) content of the conjugated diene-based polymer (A) as a final product, the molecular weight of the conjugated diene-based polymer (I), the number of the functional groups in the coupling agent (B), etc. From the viewpoint of yielding a cross-linked product with excellent wear resistance, the coupling rate is preferably 15% or higher, more preferably 20% or higher. Also, the coupling rate is preferably 75% or lower, more preferably 70% or lower, from the viewpoints of yielding a polymer composition having good processability and sufficiently reducing the viscosity of the polymer solution so as to secure productivity.

As used herein, the term "coupling rate" refers to a relative amount (mass%) of the polymers each having two or more molecular chains to the polymers present in the reaction system after reaction between a linear-chain conjugated diene-based polymer having an active end and a compound that can react with the active end. Specifically, the coupling rate refers to a relative amount (mass%) of a polymer in which two or more linear molecular chains are linked by the mediation of the coupling agent (B) or the terminal modifier (c), with respect to the total amount of the polymers involved in reaction with the coupling agent (B) or the terminal modifier (c) (i.e., linear-chain polymers included in the conjugated diene-based polymer (I)). The coupling rate may be calculated from a peak area ratio of the GPC curve obtained by means of a gel permeation chromatograph (GPC).

### <Hydrogenation step>

In the hydrogenation step, the aforementioned conjugated diene-based polymer produced via the reaction step and the modification step is subjected to hydrogenation. Any method and conditions may be employed in the hydrogenation reaction, so long as a conjugated diene-based polymer having a target percent hydrogenation is yielded. Examples of the hydrogenation method include a hydrogenation method in which a catalyst mainly formed of an organometallic (titanium) compound is used; a hydrogenation method in which catalyst formed of an organometallic (iron, nickel, and cobalt) compound and an organometallic compound such as alkylaluminum is used; a hydrogenation method in which an organic complex of an organometallic (e.g., ruthenium or rhodium) compound is used; and a hydrogenation method in which a catalyst containing a metal such as palladium, platinum, ruthenium, cobalt, or nickel is supported on a carrier such as carbon, silica, or aluminum is used. Among these methods, industrially preferred is a hydrogenation method in which hydrogenation is conducted under mild conditions (low pressure and low temperature) in the presence of a homogeneous catalyst formed only of an organometallic (titanium) compound or formed of an organometallic (titanium) compound and an organometallic (lithium, magnesium, and aluminum) compound (for example, a catalyst disclosed in Japanese Patent Publication (kokoku) Nos. 1988-4841 and 1989-37970). The method is also suited for high selectivity of hydrogenation to a double bond of butadiene.

Hydrogenation of the conjugated diene-based polymer is preferably conducted by use of a solvent which is inert to a catalyst and which can dissolve the conjugated diene-based polymer. Examples of preferred solvents include chain aliphatic hydrocarbons such as n-pentane, n-hexane, and n-octane; cyclic aliphatic hydrocarbons such as cyclohexane and cycloheptane; aromatic hydrocarbons such as benzene and toluene; and ethers such as diethyl ether and tetrahydrofuran. The solvent employed in hydrogenation may be only one member of the above compounds or a mixture containing the members as a main component.

Generally, the hydrogenation reaction is carried out by maintaining the conjugated diene-based polymer at a specific temperature in hydrogen or an inert atmosphere, adding a hydrogenation catalyst under stirring or no stirring, and supplying hydrogen gas to achieve a pressurized condition (a specific pressure). The term inert atmosphere refers to an atmosphere which does not react with substances involved in hydrogenation reaction. Examples of the inert atmosphere include atmospheres such as helium, neon, and argon. Air and oxygen are not preferred, since oxidation of a catalyst is evoked, to thereby deactivate the catalyst. Also, nitrogen is not preferred, since nitrogen serves as a catalyst poison during hydrogenation reaction, to thereby reduce hydrogenation activity. Particularly preferably, the chamber of the hydrogenation reactor is provided optimally with an atmosphere of only hydrogen gas.

The hydrogenation reaction process may be conducted as a batch process, a continuous process, or a combination thereof. When a titanocene diaryl-type compound is used as a hydrogenation catalyst, the compound as is may be added to a reaction solution, or a solution of the compound in an inert organic solvent may be added. When a solution of the catalyst is used, various solvents which do not react with the substances involved in hydrogenation reaction may be used as the inert organic solvent. The same solvent as employed hydrogenation reaction is preferred. The amount of the catalyst to be added is preferably 0.02 to 20 mmol, with respect to 100 g of the conjugated diene-based polymer before hydrogenation.

In one preferred procedure for producing the conjugated diene-based polymer (A), monomers including 1,3-butadiene and an aromatic vinyl compound are polymerized in solution in the presence of a polymerization initiator; the coupling agent (B) is added to the prepared polymer solution to perform coupling reaction; the terminal modifier (c) is added in accordance with need; and the resultant mixture is subjected to the subsequent hydrogenation step. The procedure is industrially advantageous. In this case, the conjugated diene-based polymer (A) is recovered from the above-prepared solution by removing the solvent. Isolation of the polymer may be performed through an operation including a known solvent removal method (e.g., steam stripping) and drying such as heat treatment.

From the viewpoint of yielding a cross-linked product exhibiting high mechanical strength and excellent wear resistance, the weight average molecular weight (Mw) of the conjugated diene-based polymer (A), which has been measured through GPC and reduced to polystyrene, is preferably 1.5×10⁵ to 2.0×10⁶. The Mw of the conjugated diene-based polymer (A) is more preferably 1.8×10⁵ or higher, still more preferably 2.0×10⁵ or higher. Also, the Mw is more preferably 1.6×10⁶ or lower, still more preferably 1.4×10⁶ or lower. Notably, the above-mentioned weight average molecular weight of the conjugated diene-based polymer is determined from all the peaks in the GPC curve measured through GPC before hydrogenation. Hereinafter, the molecular weight may also be referred to as a "total weight average molecular weight".

The molecular weight distribution (weight average molecular weight/number average molecular weight) of the conjugated diene-based polymer (A), which relates to the entire polymer and which has been determined through GPC, is preferably 1.1 to 4.0. From the viewpoint of achieving excellent processability of the polymer composition, the molecular weight distribution is preferably 1.1 or higher. From the viewpoint of sufficiently enhancing low hysteresis loss property of the yielded cross-linked product, the molecular weight distribution is preferably 4.0 or lower. The molecular weight distribution of the conjugated diene-based polymer (A) is more preferably 1.20 or higher, still more preferably 1.23 or higher. Also, the molecular weight distribution of the conjugated diene-based polymer (A) is more preferably 3.5 or lower, still more preferably 3.0 or lower.

The peak top molecular weight of the conjugated diene-based polymer (A), which is measured with respect to a peak corresponding to the lowest molecular weight through GPC (hereinafter may also be referred to as a "1st peak weight average molecular weight"), is preferably 0.8×10⁵ to 1.0×10⁶. When the 1st peak weight average molecular weight is 0.8×10⁵ or higher, processability can be further enhanced, while the effect of improving the mechanical strength and wear resistance of the cross-linked product can be satisfactorily enhanced, which is preferred. The 1st peak weight average molecular weight is more preferably 0.9×10⁵ or higher, still more preferably 1.0×10⁵ or higher. Also, from the viewpoint of further enhancing processability and viscoelastic characteristics, the 1st peak weight average molecular weight is more preferably 8.0×10⁵ or lower, still more preferably 5.0×10⁵ or lower. Notably, the 1st peak weight average molecular weight is determined from a GPC curve measured through GPC before hydrogenation.

### <Polymer composition>

The polymer composition of the present disclosure may contain, in addition to the conjugated diene-based polymer (A), various components other than the conjugated diene-based polymer (A). Examples of the component which may be added to the polymer composition of the present disclosure include one or more members of an antioxidant, an inorganic filler (silica, carbon black, or an additional filler), an additional rubber component, a resin, a silane coupling agent, a cross-linking agent, and an extender oil.

### [C] Antioxidant

As an antioxidant, there can be used any of known additives incorporated into a rubber as components for suppressing deterioration of vulcanized rubber possibly caused by oxygen, ozone, heat etc. Examples of the antioxidant include a quinoline-based antioxidant, an amine-based antioxidant, and a phenol-based antioxidant.

Specific examples of the quinoline-based antioxidant include 2,2,4-trimethyl-1,2-dihydroquinoline oligomers (e.g., dimer, trimer, and tetramer), 6-ethoxy-2,2,4-trimethyl-1,2-dihydroquinoline, and 6-anilino-2,2,4-trimethyl-1,2-dihydroquinoline. Specific examples of the amine-based antioxidant include N-(1,3-dimethylbutyl)-N'-phenyl-p-phenylenediamine, N,N'-bis(1,4-dimethylpentyl)-p-phenylenediamine, N,N'-bis(1-ethyl-3-methylpentyl)-p-phenylenediamine, N,N'-dicyclohexyl-p-phenylenediamine, N,N'-di-2-naphtyl-p-phenylenediamine, N-isopropyl-N'-p-phenylenediamine, phenyl-α-naphthylamine, 4,4'-dioctyldiphenylamine, styrenated diphenylamine, poly(2,2,4-trimethyl-1,2-dihydroquinoline), 6-ethoxy-2,2,4-trimethyl-1,2-dihydroquinoline, and 4,4'-bis(α,α'-dimethylbenzyl)diphenylamine. Specific examples of the phenol-based antioxidant include 2,6-di-t-butyl-4-methylphenol, styrenated phenol, 2,2'-methylenebis(4-methyl-6-tert-butylphenol), 2,2'-methylenebis(4-ethyl-6-tertbutylphenol), octadecyl 3-(3,5-di-tert-butyl-4-hydroxyphenyl)propionate, and pentaerythritol tetrakis(3,5-di-tert-butyl-4-hydroxyphenyl)propionate.

The antioxidant content of the present composition, with respect to 100 parts by mass of the rubber components (including the conjugated diene-based polymer (A), the same will apply hereinafter) contained in the polymer composition, is preferably 0.1 to 10 parts by mass, more preferably 0.2 to 8 parts by mass, still more preferably 0.2 to 7 parts by mass.

Notably, as used herein, the term "rubber component" contained in the polymer composition refers to a polymer that can provide, through curing or the like, a cured product exhibiting rubber elasticity. The cured product evokes considerable deformation at room temperature through application of small force (e.g., deformation of twice or more elongation by stretching at room temperature), and rapidly returns to substantially its original form when the force is removed.

### [D] Silica

The polymer composition of the present disclosure may contain silica as an inorganic filler. The amount of silica to be incorporated, with respect to 100 parts by mass of the rubber component(s) contained in the polymer composition, is preferably 20 to 150 parts by mass, more preferably 30 to 130 parts by mass. When the amount of silica incorporated, with respect to 100 parts by mass of the rubber component(s), is 20 parts by mass or more, low-hysteresis loss property, fracture characteristics, and wear resistance of the polymer composition can be satisfactorily enhanced. When the amount of silica is 150 parts by mass or less, processability of the polymer composition can be satisfactorily enhanced.

No particular limitation is imposed on the silica, and examples of the silica include wet silica (hydrous silicic acid), dry silica (silicic anhydride), calcium silicate, and aluminum silicate. Of these, wet silica is preferred. The BET specific surface area (as determined in accordance with ISO 5794/1) of the silica species is preferably 40 to 350 m²/g, more preferably 80 to 350 m²/g, particularly preferably 120 to 350 m²/g. A silica product having a BET specific surface area falling within the range is advantageous, from the viewpoint of achieving both reinforcement of the rubber products produced from the composition and good dispersibility of silica in the conjugated diene-based polymer (A). As such silica products, there may be used commercial products such as "Nipsile AQ" (BET specific surface area: 205 m²/g) and "Nipsil KQ" (products of Tosoh Silica Corporation), and "Ultrasil VN3" (product of Degussa, BET specific surface area: 175 m²/g).

The silica species contained in the polymer composition of the present disclosure may be used in combination of two or more species having different specific surface areas. For example, there may be employed a first silica species having a CTAB specific surface area of 180 m²/g or more, a BET specific surface area of 185 m²/g or more, and an aggregate size of 45 nm or greater, in combination with a second silica species having a CTAB specific surface area of 95 m²/g or less and a BET specific surface area of 100 m²/g or less.

The polymer composition of the present disclosure contains a first silica species having a CTAB specific surface area of 180 m²/g or more, a BET specific surface area of 185 m²/g or more, and an aggregate size of 45 nm or greater, in combination with a second silica species having a CTAB specific surface area of 95 m²/g or less and a BET specific surface area of 100 m²/g or less. By use of the aforementioned first and second silica species, the first silica species having a small mean primary particle size and a relatively large aggregate size can be suitably dispersed in the rubber component. As a result, dispersibility of silica can be improved, and excellent rubber fracture strength, wear resistance, fuel efficiency, and processabily can be attained.

### [E] Carbon black

From the viewpoints of fracture characteristics and wear resistance, the polymer composition of the present disclosure preferably contains carbon black as an inorganic iller. No particular limitation is imposed on the carbon black, and examples thereof include carbon black products of a grade such as GPF, FEF, HAF, ISAF, or SAF. No particular limitation is imposed on the nitrogen adsorption specific surface area (N₂SA) of carbon black, and it is preferably 50 to 200 m²/g, more preferably 70 to 150 m²/g, from the viewpoint of achieving further sufficient effects of the present disclosure. The nitrogen adsorption specific surface area (N₂SA) is defined as a value obtained by measuring the amount of nitrogen adsorbed on the surface of carbon black through JIS K6217-2:2001 "part 2: Determination of specific surface area, Nitrogen adsorption method, Single point method." The amount of carbon black to be added, with respect to 100 parts by mass of the rubber component(s) contained in the polymer composition, is preferably 1 to 150 parts by mass, more preferably 5 to 120 parts by mass.

### [Other fillers]

The composition of the present disclosure may contain, in addition to the aforementioned silica and carbon black, an additional filler as an inorganic filler. Examples of the additional filler include alumina (Al₂O₃) such as γ-alumina or α-alumina; alumina monohydrate (Al₂O₃-H₂O) such as bohemite or diaspore; aluminum hydroxide [Al(OH)₃] such as gibbsite or bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (e.g., Al₂SiO₅ or Al₄·3SiO₄·5H₂O), magnesium silicate (e.g., Mg₂SiO₄ or MgSiO₃), calcium silicate (e.g., Ca₂SiO₄), aluminum calcium silicate (e.g., Al₂O₃·CaO·2SiO₂), magnesium calcium silicate (CaMgSiO₄), calcium carbonate (CaCO₃), zirconium oxide (ZrO₂), zirconium hydroxide [ZrO(OH)₂·nH₂O], and zirconium carbonate [Zr(CO₃)₂]; and crystalline aluminosilicate salts such as various zeolites, which contains hydrogen, an alkali metal, or an alkaline earth metal for compensating electric charge.

In the polymer composition of the present disclosure, the relative amount of the added inorganic filler (silica, carbon black, and additional filler(s)) contained in the polymer composition is preferably 30 parts by mass or more, more preferably 40 parts by mass or more, with respect to 100 parts by mass of rubber component(s). Also, the added filler content is preferably 150 parts by mass or less, more preferably 130 parts by mass or less. When the added filler content of the polymer composition satisfies the above conditions, in the case where the polymer composition of the present disclosure is used for producing tire treads, low rolling resistance, braking distance on the wet road surface, handling performance on the dry road surface, and wear resistance of the tire can be further improved in a highly well-balanced manner.

### [F] Additional rubber component

The polymer composition of the present disclosure may contain only the conjugated diene-based polymer (A) as a rubber component. Alternatively, the polymer composition may contain, in addition to the conjugated diene-based polymer (A), a rubber component differing from the conjugated diene-based polymer (A) (hereinafter may also be referred to as an "additional rubber component"), so long as the effects of the present disclosure are not impaired. As the additional rubber component, there may be used one or more diene-based rubbers selected from natural rubber, isoprene rubber, butadiene rubber, emulsion-polymerized styrene-butadiene rubber, solution-polymerized styrene-butadiene rubber, butyl rubber, halogenated butyl rubber, and ethylene-propylene rubber. Among them, the additional rubber component is preferably at least one species selected from natural rubber, butadiene rubber, and styrene-butadiene rubber. No particular limitation is imposed on the mode of mixing the additional rubber component with the conjugated diene-based polymer (A). For example, the additional rubber component and the conjugated diene-based polymer (A) may be mixed during kneading by means of a Banbury mixer, a roller, or the like, which is generally carried out. Alternatively, the additional rubber component may be added to a solution of conjugated diene-based polymer (A) after polymerization.

The amount of the additional rubber component to be added, with respect to the total amount of the rubber components (i.e., the conjugated diene-based polymer (A) and the additional rubber component(s)) contained in the polymer composition, is preferably 80 mass% or less, more preferably 60 mass% or less, still more preferably 40 mass% or less.

In the present disclosure, a liquid rubber may be employed as a part or the entirety of the additional rubber component, from the viewpoint of further enhancement of dry grip performance, wet grip performance, and blow out resistance.

Examples of the liquid rubber include liquid polyisoprene (liquid IR), liquid polybutadiene (liquid BR), liquid styrene-butadiene copolymer (liquid SBR), and liquid ethylene-propylene copolymer (liquid EP). For example, a liquid SBR having a weight average molecular weight of 1,000 to 100,000, preferably 2,000 to 80,000 may be used. As used herein, the weight average molecular weight refers to a weight average molecular weight (reduced to polystyrene) determined through gel permeation chromatography (GPC). The liquid rubber employed in the present disclosure exhibits a flowability at 23°C.

### [G] Resin

The polymer composition of the present disclosure may contain a thermoplastic/thermosetting resin (hereinafter may also be referred to simply as a "resin (G)"). From the viewpoint of providing a vulcanized rubber having more excellent properties including mechanical strength, wear resistance, and anti-crack-propagation property, the resin (G) is preferably at least one species selected from the group containing of a styrene-based resin, polyethylene, a C5-type resin, a C9-type resin, a C5/C9-type resin, a dicyclopentadiene (DCPD)-based resin, a dicyclopentadiene/C9-type resin, an alkyl-phenolic resin, a terpene-based resin, a hydrogenated C5-type resin, a hydrogenated C9-type resin, a hydrogenated dicyclopentadiene-based resin, a hydrogenated dicyclopentadiene/C9-type resin, and a hydrogenated terpene-based resin. From the viewpoint of achieving a high effect of improving properties including mechanical strength, wear resistance, and anti-crack-propagation property, a thermoplastic resin is particularly preferably used as the resin (G).

The styrene-based resin is a polymer obtained from a styrene-based monomer. Among such polymers, preferred is a styrene-based polymer including a structural unit derived from a styrene-based monomer in an amount of 20 mass% or more with respect to the entire amount of the monomer units of the styrene-based resin. Examples of the styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Among them, the styrene-based monomer is preferably at least one of styrene and α-methylstyrene.

The styrene-based resin may be a homopolymer formed through polymerization of one single styrene-based monomer, or a copolymer formed through co-polymerization of two or more styrene-based monomers. Alternatively, the styrene-based resin may be a copolymer of a styrene-based monomer and another monomer which can co-polymerize with the styrene-based monomer. Examples of the above additional monomer include acrylonitriles such as acrylonitrile and (meth)acrylonitrile; unsaturated carboxylic acids such as acrylic compounds and (meth)acrylic acids; unsaturated carboxylic acid esters such as methyl acrylate and methyl (meth)acrylate; dienes such as chloroprene, butadiene, and isoprene; olefins such as 1-butene and 1-pentene; and α,β-unsaturated carboxylic acids or anhydrides such as maleic anhydride.

As the styrene-based resin, there may be used a block polymer (thermoplastic elastomer) including a conjugated diene-based polymer block as a soft segment and a polystyrene-based block as a hard segment.

Specific examples of the above block polymer include styrene-butadiene block copolymer, styrene-isoprene block copolymer, an epoxidated product of styrene-butadiene block copolymer, and a block copolymer in which a part of conjugated diene-based polymer blocks of a styrene-butadiene block copolymer or a styrene-isoprene block copolymer have been hydrogenated. More specifically, there are preferably used styrene-butadiene-styrene block copolymer (SBS), styrene-isoprene-styrene block copolymer (SIS), styrene-ethylene-butylene-styrene block copolymer (SEBS), an epoxidated product of styrene-butadiene-styrene block copolymer, hydrogenated products of these copolymers, or the like.

Examples of the polyethylene species include low-density polyethylene (LDPE), high-density polyethylene (HDPE), and linear low-density polyethylene (LLDPE). The C5-type resin is a solid polymer (C5-type synthetic petroleum resin) obtained through polymerization of a C5 fraction in the presence of a Friedel-Crafts catalyst (e.g., AlCl₃ or BF₃). Specific examples of the C5-type resin include copolymers mainly formed from isoprene, cyclopentadiene, 1,3-pentadiene, 1-pentene, etc., 2-pentene-dicyclopentadiene copolymer, and a polymer mainly formed from 1,3-pentadiene.

The C9-type resin is a solid polymer (C9-type synthetic petroleum resin) obtained through polymerization of a C9 fraction in the presence of a Friedel-Crafts catalyst (e.g., AlCl₃ or BF₃). Specific examples of the C9-type resin include copolymers mainly formed from one or more of indene, methylindene, coumarone, vinyltoluene, etc.

The C5/C9-type resin is a solid polymer (C5/C9-type synthetic petroleum resin) obtained through polymerization of C5 to C9 fractions in the presence of a Friedel-Crafts catalyst (e.g., AlCl₃ or BF₃). Specific examples of the C5/C9-type resin include copolymers mainly formed from, for example, vinyltoluene and indene. From the viewpoint of compatibility with rubber components, the C5/C9-type resin preferably has low C≥9 component content. Specifically, the C5/C9 resin preferably has an amount of C≥9 components in the total amount of the resin less than 50 mass%, more preferably 40 mass% or less.

The dicyclopentadiene (DCPD)-based resin is a petroleum resin obtained mainly from dicyclopentadiene present in a C5 fraction. Specific examples of the dicyclopentadiene-based resin include "Markarez M" series (M-890A, M-845A, M-990A, etc.) (products of Maruzen Petrochemical Co., Ltd.).

The dicyclopentadiene/C9-type resin is a petroleum resin obtained mainly from dicyclopentadiene (DCPD) present in a C5 fraction and a C9 fraction. Specific examples of the dicyclopentadiene/C9-type resin include "EP-140" (product of ENEOS).

Examples of the alkylphenolic resin include alkylphenol acetylene resin such as p-tert-butylphenol acetylene resin; and alkylphenol-formaldehyde resin of low polymerization degree.

The terpene-based resin is a solid resin prepared by polymerizing turpentine (recovered in production of rosin from pine trees) or a polymerization component isolated therefrom in the presence of a Friedel-Crafts catalyst, and examples thereof include β-pinene resin and α-pinene resin. Commercial products of the terpene-based resin may also be used. Examples thereof include "Piccolyte" series (A115, S115, etc.) (products of Hercules).

A typical example of the terpene-aromatic compound resin is a terpene-phenolic resin. The terpene-phenolic resin may be prepared by reacting a terpene with various phenols in the presence of a Friedel-Crafts catalyst, or such a process further concomitant with condensation with formalin. No particular limitation is imposed on the raw material terpene, and monoterpene hydrocarbons such as α-pinene and limonene are preferred. A monoterpene hydrocarbon including α-pinene is more preferred, with pure α-pinene being particularly preferred. In the present disclosure, a terpene-phenolic resin having low phenolic content is preferred. The term "low phenol component content" refers to the phenolic content of the total amount of the resin being less than 50 mass%, preferably 40 mass% or less. Notably, when a terpene-aromatic compound resin, in particular, a terpene-phenolic resin, is used as resin (G), handling performance can also be enhanced. Commercial products of the terpene-aromatic compound resin may be used. Examples of commercial products include "Tamanol 803L" and "Tamanol 901" (products of Arakawa Chemical Industries, Ltd.) and "SYLVATRAXX4202" (product of Arizona Chemical).

The hydrogenated C5 resin, hydrogenated C9 resin, hydrogenated dicyclopentadiene-based resin, hydrogenated dicyclopentadiene/C9-type resin, and hydrogenated terpene-based resin (hereinafter may also be collectively referred to as a "hydrogenation resin") each are a resin formed by hydrogenating the starting resin. Commercial products of hydrogenated resin may also be used. Examples thereof include "Impera (registered trademark) E1780" (product of Eastman) (as hydrogenated C5 resin); "Arkon M135" (products of Arakawa Chemical Industries, Ltd.) (as hydrogenated C9 resin); "Oppera PR-120" (product of Exxon Mobile Corportaion) and "T-REZ HA125" (product of ENEOS) (as hydrogenated dicyclopentadiene-based resin); and "T-REZ PR803" (product of ENEOS) (as hydrogenated dicyclopentadiene/C9-type resin).

The amount of the resin (G) to be incorporated is preferably 1 part by mass or more, with respect to 100 parts by mass of the rubber component(s) contained in the present rubber compound. In corporation of the resin (G) in an amount of 1 part by mass or more is suitable, since there can be satisfactorily enhanced effect of improving the wear resistance, breaking strength, and anti-crack-propagation property of the cross-linked product obtained from the rubber compound by the addition of the resin (G). The amount of the resin (G) to be added is more preferably 3 parts by mass or more, still more preferably 7 parts by mass or more, with respect to 100 parts by mass of the rubber component(s). From the viewpoint of maintaining characteristics of the rubber compound at suitable levels, the amount of the resin (G) to be added is preferably 50 parts by mass or less, more preferably 30 parts by mass or less, still more preferably 25 parts by mass or less, with respect to 100 parts by mass of the rubber component(s) contained in the rubber compound.

### [H] Silane coupling agent

By adding a silane coupling agent along with silica into the polymer composition of the present disclosure, dispersibility of silica can be further enhanced. No particular limitation is imposed on the silane coupling agent to be used, but a sulfur-containing silane coupling agent is preferred. Examples of the silane coupling agent include bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, and 3-octanoylthiopropyltriethoxysilane.

The amount of the silane coupling agent to be used is preferably 1 to 20 parts by mass, with respect to 100 mass of silica. When the amount of the silane coupling agent to be added is 1 part by mass or more, dispersibility of silica can be sufficiently attained by virtue of a sufficient amount of the coupling agent. Also, when the amount of the silane coupling agent to be added is 20 parts by mass or less, processability of the polymer composition and elongation at break can be maintained at a suitable level. The amount of the silane coupling agent is more preferably 5 to 15 parts by mass, with respect to 100 parts by mass of silica.

### [I] Cross-linking agent

The polymer composition of the present disclosure may contain a cross-linking agent. When the polymer composition of the present disclosure contains a cross-linking agent, a cross-linked product having satisfactorily enhanced mechanical strength and wear resistance can be yielded. Examples of the cross-linking agent include sulfur, halogenated sulfur, an organic peroxide, a quinonedioxime, an organic polyvalent amine compound, and an alkylphenol resin having a methylol group. Generally, sulfur is used. The amount of the cross-linking agent to be added, with respect to the total amount of the rubber components contained in the polymer composition as 100 parts by mass, is preferably 0.1 to 5 parts by mass, more preferably 0.5 to 3 parts by mass.

### [J] Extender oil

Into the polymer composition of the present disclosure, a process oil which is generally used for oil-extending an elastomer may be incorporated as an extender oil. No particular limitation is imposed on the method of adding process oil. In one possible method, a process oil is extended in a conjugated diene-based polymer solution after completion of polymerization, and the solvent is removed, to thereby provide an oil-extended rubber to be formulated. In another possible method, a process oil is directly incorporated into to a polymer composition via direct addition during kneading by means of a Bunbury mixer, a roller, or the like. Various oils known in the art are preferably used as a process oil, and examples of the process oil include aromatic oil, paraffin-based oil, naphthene-based oil, and vegetable oil and, further oils having low polycyclic aromatic compound content (i.e., low-PCA oils) such as a mild extraction solvate (MES), a treated distillate aromatic extract (TDAE), and a special residual aromatic extract (SRAE); and heavy naphthene-based oil. Examples of commercial products of MES, TDAE, and SRAE include Catenex SNR (heavy paraffin obtained by dewaxing a distillate with solvent) (product of Shell) as MES; Vivatec 500 (product of H&R Wasag AG) as TDAE; and NC140 (product of Japan Energy Corp.) as SRAE. The amount of process oil to be added is preferably 10 to 100 parts by mass, with respect to the total amount of the polymer components contained in the polymer composition as 100 parts by mass.

In addition to the aforementioned components, various additives generally employed in polymer compositions for producing vulcanized rubber may be incorporated into the polymer composition. Examples of such additives include zinc flower, stearic acid, a softening agent, a vulcanization accelerator, a compatibilizer, a vulcanization aid, a processing aid, and an anti-scorching agent. The amount of each additive may be appropriately determined, so long as the effects of the present disclosure are not impaired.

The polymer composition of the present disclosure can be applied, as a cross-linked product, to various rubber products, by kneading rubber components and optionally added components by means of a kneader such as an open-type kneader (e.g., a roller) or a close-type kneader (e.g., a Banbury mixer); molding; and cross-linking (vulcanizing). More specifically, the cross-linked product can be applied to, for example, tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibrationproof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

According to the conjugated diene-based polymer (A), a cross-linked product can be obtained, wherein the product exhibits excellent physical properties required for tires (e.g., mechanical strength, rolling resistance, and wet grip performance). Thus, the polymer composition containing the conjugated diene-based polymer can be suitably used as a material particularly for forming cap treads or sidewalls of tires or both.

Production of tires may be carried out through any customary method. In one procedure, the polymer composition is kneaded by means of a kneader, and the kneaded product is formed into a sheet, which is placed at a predetermined position (e.g., outside the carcass in the case of sidewall) through a customary method, followed by performing vulcanization molding. As a result, treads or sidewalls are formed, to thereby yield a pneumatic tire.

The present disclosure, which has been described in detail hereinabove, provides the following means. [Means 1] A conjugated diene-based polymer including a structural unit derived from butadiene and a structural unit derived from an aromatic vinyl compound, wherein, when the proportions by mole of a structural unit represented by the aforementioned formula (1), a structural unit represented by the aforementioned formula (2), a structural unit represented by the aforementioned formula (3), and a structural unit represented by the aforementioned formula (4), in the polymer, are represented by p, q, r, and s, respectively, the value α defined by the aforementioned numerical formula (i) is 0.60 to 0.97; the relative amount of the structural unit derived from the aromatic vinyl compound is 5 mass% to 50 mass%; and the value θst, calculated from a ¹H-NMR spectrum as measured in deuterated chloroform as a solvent and by the aforementioned numerical formula (ii) ss greater than 4 mass% and less than 27 mass%. [Means 2] The conjugated diene-based polymer according to [Means 1], which has a functional group containing at least one element selected from the group consisting of nitrogen, oxygen, phosphorus, silicon, and sulfur. [Means 3] The conjugated diene-based polymer according to [Means 1] or [Means 2], which includes a polymer having a multi-branch structure with 4 or more molecular chains, in a relative amount of 15 mass% to 75 mass%. [Means 4] The conjugated diene-based polymer according to any of [Means 1] to [Means 3], which includes the structural unit derived from an aromatic vinyl compound in a relative amount of 25 mass% to 50 mass%. [Means 5] The conjugated diene-based polymer according to any of [Means 1] to [Means 3], wherein the value β represented by the aforementioned numerical formula (iii) is 0.05 to 0.70. [Means 6] A polymer composition containing a conjugated diene-based polymer as recited in any of [Means 1] to [Means 5], and an antioxidant. [Means 7] The polymer composition according to [Means 6], which further contains a resin. [Means 8] The polymer composition according to [Means 6] or [Means 7], which further contains an extender oil. [Means 9] The polymer composition according to any of [Means 6] to [Means 8], which further contains an inorganic filler. [Means 10] The polymer composition according to [Means 9], wherein the inorganic filler includes silica, and the composition further contains a silane coupling agent. [Means 11] A cross-linked product formed by cross-linking of a polymer composition as recited in any of [Means 6] to [Means 10]. [Means 12] A tire having a cap tread and a sidewall, wherein one or both of them is formed from cross-linked product of a polymer composition as recited in any of [Means 6] to [Means 10].

### Examples

The present disclosure will next be described in detail by way of examples, which should not be construed as limiting the disclosure thereto. Unless otherwise specified, "part(s)" and "%" in the Examples and Comparative Examples are on a mass basis. Physical properties of each polymer were measured through the following methods.

### [Characteristic evaluation of polymer]

·Vinyl bond content (mol%): The vinyl bond content of a polymer before hydrogenation was determined through 400 MHz ¹H-NMR.
·Bound styrene content (%): The bound styrene content of a polymer before hydrogenation was determined through 400 MHz ¹H-NMR.
·1st peak average molecular weight: The 1st peak average molecular weight (as reduced to polystyrene) of a polymer before hydrogenation was determined by means of a gel permeation chromatograph (GPC, HLC-8020 (product of Tosoh Corporation)). Specifically, a chart based on the molecular weight (as reduced to polystyrene) was obtained, and the molecular weight was determined from the retention time of a peak having the longest retention time in the GPC curve. Specific measurement conditions are as follows.

### (Measurement conditions)

Column: GMH-HR-H (product of Tosoh Corporation). Two columns were connected in series.
Detector: Differential refractometer RI-8020 (product of Tosoh Corporation)
Eluent: Tetrahydrofuran
Column temperature: 40°C
Flow rate: 1.0 mL/min
Sample concentration: 10 mg/20mL

·Total weight average molecular weight: The total weight average molecular weight (as reduced to polystyrene) of a polymer before hydrogenation was determined from all the peaks of a GPC curve obtained by means of a gel permeation chromatograph (GPC, HLC-8020 (product of Tosoh Corporation)), under the same measurement conditions.
·Coupling rate (mass%): The coupling rate of a polymer before hydrogenation was determined from a peak area ratio of a GPC curve obtained by means of a gel permeation chromatograph (GPC, HLC-8020 (product of Tosoh Corporation)), thereby calculating the ratio of coupling polymers each having two or more molecular chains.
·Hydrogenation ratio and α: Determined from an ¹H-NMR spectrum obtained by means of a 400 MHz NMR, with deuterated chloroform as a solvent.
·Polymer (A1) content: The polymer (A1) content of a polymer before hydrogenation was calculated from a GPC curve obtained by means of a gel permeation chromatograph (GPC, HLC-8020 (product of Tosoh Corporation)), under separation of a wave form component attributed to ≥4 branching coupling polymers in the GPC curve.
·Styrene chain ratio (mass%): The styrene chain ratio (θst), which is a ratio of a chain including 8 or more linked styrene structural units to all the styrene structural units in the polymer, was determined through the following procedure. Specifically, the ratio of the integral value in the chemical shift range (a) Σ(a) to the sum of the integral values in the chemical shift ranges of the (a) to (c) Σ(a, b, c) was calculated from a 500 MHz ¹H-NMR spectrum measured with deuterated chloroform as a solvent, then multiplying the ratio by 2.5. The value was employed as the styrene chain ratio (θst) [wt%] (the following numerical formula (ii)).
   (a) a chain of ≥8 aromatic vinyl compound units: 6.00≤S<6.68;
   (b) a chain of 2 to 7 aromatic vinyl compound units: 6.68≤S<6.89; and
   (c) a short chain of aromatic vinyl compound units: 6.89≤S≤8.00 $θst = \left[\left(\sum \left(a\right) / \sum \left(a, b, c\right)\right)\times 2.5\right] \times 100$ (ii)

### <Production of hydrogenated conjugated diene-based polymer>

### [Example 1: Synthesis and physical properties of hydrogenated conjugated diene-based polymer A-1]

To an autoclave reactor (capacity: 50 L) with a nitrogen atmosphere, cyclohexane (25,800 g), tetrahydrofuran (26 g), potassium dodecyl benzenesulfonate (0.32 g), styrene (1,505 g), and 1,3-butadiene (2,709 g) were added. The temperature of the contents of the reactor was adjusted to 45°C, and then n-butyllithium (34 mmol) dissolved in cyclohexane was added, to thereby initiate polymerization. Polymerization was performed under adiabatic conditions. When the polymerization conversion was confirmed to be 99%, 1,3-butadiene (additional, 86 g) was further added (i.e., additional butadiene supply), and the resultant mixture was allowed to react for 3 minutes, to thereby yield a reaction mixture containing the polymer. Tetrachlorosilane (2.0 mmol) was added to the reaction mixture, and the resultant mixture was allowed to react for 5 minutes. Subsequently, N,N-bis(trimethylsilyl)aminopropylmethyldiethoxysilane (26 mmol) was further added, and the resultant mixture was allowed to react for 15 minutes.

Then, the reaction mixture was heated to 80°C or higher, and hydrogen was fed to the reaction system, where reaction was performed for 1 hour. For the purpose of analysis, an aliquot of the polymer solution was extracted from the reactor, to thereby recover a conjugated diene-based polymer before hydrogenation. Thereafter, diethylaluminum chloride (3.56 g), bis(η5-cyclopentadienyl)titanium (furfuryloxy)chloride (2.72 g), and n-butyllithium (1.23 g) were added thereto, where hydrogenation reaction was conducted with maintaining the hydrogen pressure at 1.0 MPa. After completion of reaction, hydrogen was fed to achievement of a target cumulative hydrogen amount, with maintaining the hydrogen pressure at 0.7 MPa or higher, to thereby conduct reaction. Then, the reaction mixture was returned to conditions of ambient temperature and normal pressure, and extracted from the reactor, to thereby yield a polymer solution containing a hydrogenated conjugated diene-based polymer A-1. An aliquot of the thus-obtained polymer solution was extracted, and the solvent was removed through steam stripping. The product was dried by means of a heat roller controlled at 130°C, to thereby yield the hydrogenated conjugated diene-based polymer A-1. Table 1 shows formulations for producing the hydrogenated conjugated diene-based polymer A-1, and Table 3 shows values of physical properties and the like of the obtained hydrogenated conjugated diene-based polymer A-1.

### [Examples 2, 3, and 5 to 12, and Comparative Examples 3 to 5: Production of hydrogenated conjugated diene-based polymers A-2, A-3, A-5 to A-12, and A-15 to A-17, and physical properties thereof]

The procedure of Example 1 was repeated, except that formulations employed in polymerization were modified as shown in Tables 1 and 2, and the hydrogenation ratio was modified as shown in Tables 3 and 4, to thereby yield polymer solutions containing the hydrogenated conjugated diene-based polymers A-2, A-3, A-5 to A-12, and A-15 to A-17, respectively. Tables 3 and 4 show values of physical properties and the like of the hydrogenated conjugated diene-based polymer A-2, A-3, A-5 to A-12, and A-15 to A-17.

### [Example 4: Synthesis and physical properties of hydrogenated conjugated diene-based polymer A-4]

To an autoclave reactor (capacity: 50 L) with a nitrogen atmosphere, cyclohexane (25,800 g), tetrahydrofuran (26 g), potassium dodecyl benzenesulfonate (0.86 g), styrene (645 g), and 1,3-butadiene (645 g) were added. The temperature of the contents of the reactor was adjusted to 45°C, and then n-butyllithium (39 mmol) dissolved in cyclohexane was added, to thereby initiate polymerization. Polymerization was performed under adiabatic conditions. When the temperature of the contents reached 55°C (corresponding to a polymerization conversion of 30%), 1,3-butadiene (additional, 3,010 g) was further added to the reactor at a constant supplying rate over 10 minutes (i.e., additional butadiene supply). Polymerization was performed under adiabatic conditions, and the temperature rose to 85°C (the highest temperature). When the polymerization conversion was confirmed to be 99%, a reaction mixture containing the polymer was yielded. Tetrachlorosilane (2.3 mmol) was added to the reaction mixture, the resultant mixture was allowed to react for 5 minutes. Subsequently, N,N-bis(trimethylsilyl)aminopropylmethyldiethoxysilane (29 mmol) was further added, and the resultant mixture was allowed to react for 15 minutes.

Then, the reaction mixture was heated to 80°C or higher, and hydrogen was fed to the reaction system, where reaction was performed for 1 hour. For the purpose of analysis, an aliquot of the polymer solution was extracted from the reactor, to thereby recover a conjugated diene-based polymer before hydrogenation. Thereafter, diethylaluminum chloride (4.08 g), bis(η5-cyclopentadienyl)titanium (furfuryloxy)chloride (3.56 g), and n-butyllithium (1.61 g) were added thereto, where hydrogenation reaction was conducted with maintaining the hydrogen pressure at 1.0 MPa. After completion of reaction, hydrogen was fed to achievement of a target cumulative hydrogen amount, with maintaining the hydrogen pressure at 0.7 MPa or higher, to thereby conduct reaction. Then, the reaction mixture was returned to conditions of ambient temperature and normal pressure, and extracted from the reactor, to thereby yield a polymer solution containing a hydrogenated conjugated diene-based polymer A-4. An aliquot of the thus-obtained polymer solution was extracted, and the solvent was removed through steam stripping. The product was dried by means of a heat roller controlled at 130°C, to thereby yield the hydrogenated conjugated diene-based polymer A-4. Table 1 shows formulations for producing the hydrogenated conjugated diene-based polymer A-4, and Table 3 shows values of physical properties and the like of the obtained hydrogenated conjugated diene-based polymer A-4.

### [Comparative Example 1: Production of hydrogenated conjugated diene-based polymer A-13 and physical properties thereof]

The procedure of Example 4 was repeated, except that formulations employed in polymerization were modified as shown in Table 2, and the hydrogenation ratio was modified as shown in Table 4, to thereby yield a polymer solution containing the hydrogenated conjugated diene-based polymer A-13. Table 4 shows values of physical properties and the like of the hydrogenated conjugated diene-based polymer A-13.

### [Comparative Example 2: Synthesis and physical properties of hydrogenated conjugated diene-based polymer A-14]

To an autoclave reactor (capacity: 50 L) with a nitrogen atmosphere, cyclohexane (25,800 g), tetrahydrofuran (26 g), styrene (1,505 g), and 1,3-butadiene (2,709 g) were added. The temperature of the contents of the reactor was adjusted to 45°C, and then n-butyllithium (34 mmol) dissolved in cyclohexane was added, to thereby initiate polymerization. Polymerization was performed under adiabatic conditions. When the polymerization conversion was confirmed to be 99%, 1,3-butadiene (additional, 86 g) was further added (i.e., additional butadiene supply), and the resultant mixture was allowed to react for 3 minutes, to thereby yield a reaction mixture containing the polymer. Tetrachlorosilane (2.0 mmol) was added to the reaction mixture, and the resultant mixture was allowed to react for 5 minutes. Subsequently, N,N-bis(trimethylsilyl)aminopropylmethyldiethoxysilane (26 mmol) was further added, and the resultant mixture was allowed to react for 15 minutes.

Then, the reaction mixture was heated to 80°C or higher, and hydrogen was fed to the reaction system, where reaction was performed for 1 hour. For the purpose of analysis, an aliquot of the polymer solution was extracted from the reactor, to thereby recover a conjugated diene-based polymer before hydrogenation. Thereafter, diethylaluminum chloride (3.56 g), bis(η5-cyclopentadienyl)titanium (furfuryloxy)chloride (2.72 g), and n-butyllithium (1.23 g) were added thereto, where hydrogenation reaction was conducted with maintaining the hydrogen pressure at 1.0 MPa. After completion of reaction, hydrogen was fed to achievement of a target cumulative hydrogen amount, with maintaining the hydrogen pressure at 0.7 MPa or higher, to thereby conduct reaction. Then, the reaction mixture was returned to conditions of ambient temperature and normal pressure, and extracted from the reactor, to thereby yield a polymer solution containing a hydrogenated conjugated diene-based polymer A-14. An aliquot of the thus-obtained polymer solution was extracted, and the solvent was removed through steam stripping. The product was dried by means of a heat roller controlled at 130°C, to thereby yield the hydrogenated conjugated diene-based polymer A-14. Table 2 shows formulations for producing the hydrogenated conjugated diene-based polymer A-14, and Table 4 shows values of physical properties and the like of the obtained hydrogenated conjugated diene-based polymer A-14.

### [Comparative Example 6: Production of hydrogenated conjugated diene-based polymer A-18 and physical properties thereof]

The procedure of Comparative Example 2 was repeated, except that formulations employed in polymerization were modified as shown in Table 2, and the hydrogenation ratio was modified as shown in Table 4, to thereby yield a polymer solution containing the hydrogenated conjugated diene-based polymer A-18. Table 4 shows values of physical properties and the like of the hydrogenated conjugated diene-based polymer A-18.

**[Table 1]**

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Polymer name | | A-1 | A-2 | A-3 | A-4 | A-5 | A-6 | A-7 | A-8 | A-9 | A-10 | A-11 | A-12 |
| Formulations in polymerization | | | | | | | | | | | | | |
| Solvent | | | | | | | | | | | | | |
| : cyclohexane | (g) | 25800 | 25800 | 25800 | 25800 | 25800 | 25800 | 25800 | 25800 | 25800 | 25800 | 25800 | 25800 |

| Vinyl content-modifying agent | | | | | | | | | | | | | |
|---|---|---|---|---|---|---|---|---|---|---|---|---|---|
| : tetrahydrofuran | (g) | 26 | 26 | 26 | 26 | 26 | 26 | 26 | 26 | 26 | 26 | 73 | 13 |
| : V-1 | (g) | 0.32 | 0.32 | 0.32 | 0.86 | 0.64 | 0.64 | 0.64 | 0.32 | 0.32 | 0.32 | 0.32 | 0.32 |

| Monomer | | | | | | | | | | | | | |
|---|---|---|---|---|---|---|---|---|---|---|---|---|---|
| : styrene | (g) | 1505 | 1118 | 1935 | 645 | 1505 | 1118 | 1935 | 1505 | 1505 | 1505 | 1505 | 1505 |
| : butadiene | (g) | 2709 | 3096 | 2279 | 645 | 2709 | 3096 | 2279 | 2709 | 2709 | 2709 | 2709 | 2709 |
| : additional butadiene | (g) | 86 | 86 | 86 | 3010 | 86 | 86 | 86 | 86 | 86 | 86 | 86 | 86 |

| Polymerization initiator | | | | | | | | | | | | | |
|---|---|---|---|---|---|---|---|---|---|---|---|---|---|
| : n-butyllithium | (mmol) | 34 | 36 | 32 | 39 | 34 | 36 | 32 | 34 | 34 | 34 | 34 | 34 |

| Terminal modifier | | | | | | | | | | | | | |
|---|---|---|---|---|---|---|---|---|---|---|---|---|---|
| : compound 1 | (mmol) | 26 | 27 | 24 | 29 | 26 | 27 | 24 | 26 | 26 | 26 | 26 | 26 |

| Coupling agent | | | | | | | | | | | | | |
|---|---|---|---|---|---|---|---|---|---|---|---|---|---|
| : compound 2 | (mmol) | 2.0 | 2.1 | 1.9 | 2.3 | 2.0 | 2.1 | 1.9 | 2.0 | 2.0 | 2.0 | 2.0 | 2.0 |

**[Table 2]**

| | | Comparative Examples | | | | | |
|---|---|---|---|---|---|---|---|
| | | 1 | 2 | 3 | 4 | 5 | 6 |
| Polymer name | | A-13 | A-14 | A-15 | A-16 | A-17 | A-18 |
| Formulations in polymerization | | | | | | | |
| Solvent | | | | | | | |
| : cyclohexane | (g) | 25800 | 25800 | 25800 | 25800 | 25800 | 25800 |

| Vinyl content-modifying agent | | | | | | | |
|---|---|---|---|---|---|---|---|
| : tetrahydrofuran | (g) | 26 | 26 | 26 | 26 | 26 | 26 |
| : V-1 | (g) | 1.9 | - | 0.32 | 0.32 | 0.86 | - |

| Monomer | | | | | | | |
|---|---|---|---|---|---|---|---|
| : styrene | (g) | 1505 | 1505 | 1505 | 1505 | 2365 | 172 |
| : butadiene | (g) | 1505 | 2709 | 2709 | 2709 | 1849 | 4128 |
| : additional butadiene | (g) | 1290 | 86 | 86 | 86 | 86 | - |

| Polymerization initiator | | | | | | | |
|---|---|---|---|---|---|---|---|
| : n-butyllithium | (mmol) | 34 | 34 | 34 | 34 | 30 | 42 |

| Terminal modifier | | | | | | | |
|---|---|---|---|---|---|---|---|
| : compound 1 | (mmol) | 26 | 26 | 26 | 26 | 23 | 32 |

| Coupling agent | | | | | | | |
|---|---|---|---|---|---|---|---|
| : compound 2 | (mmol) | 2.0 | 2.0 | 2.0 | 2.0 | 1.8 | 2.5 |

In Tables 1 and 2, the symbol "-" denotes no use of the compound in the corresponding column. The abbreviations of the vinyl content-modifying agent, terminal modifier, and coupling agent are as follows.
V-1: potassium dodecyl benzenesulfonate
Compound 1: N,N-bis(trimethylsilyl)aminopropylmethyldiethoxysilane
Compound 2: tetrachlorosilane

**[Table 3]**

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Polymer name | A-1 | A-2 | A-3 | A-4 | A-5 | A-6 | A-7 | A-8 | A-9 | A-10 | A-11 | A-12 |
| 1st peak weight average molecular weight (×10⁴) | 20 | 20 | 20 | 20 | 20 | 20 | 20 | 20 | 20 | 20 | 20 | 20 |
| Total weight average molecular weight (×10⁴) | 32 | 32 | 32 | 32 | 32 | 32 | 32 | 32 | 32 | 32 | 32 | 32 |
| Coupling rate (%) | 24 | 24 | 24 | 24 | 24 | 24 | 24 | 24 | 24 | 24 | 24 | 24 |
| Polymer (A1) content (%) | 22 | 22 | 22 | 22 | 22 | 22 | 22 | 22 | 22 | 22 | 22 | 22 |
| Bound styrene content (wt%) | 35 | 26 | 45 | 15 | 35 | 26 | 45 | 35 | 35 | 35 | 35 | 35 |
| Vinyl bond content (mol%) | 27 | 27 | 27 | 27 | 27 | 27 | 27 | 27 | 27 | 27 | 37 | 23 |
| θst (wt% in ST) | 10 | 7 | 13 | 15 | 20 | 14 | 24 | 10 | 10 | 10 | 10 | 10 |
| Hydrogenation ratio (%) | 85 | 85 | 85 | 85 | 85 | 85 | 85 | 95 | 75 | 65 | 85 | 85 |
| α | 0.85 | 0.85 | 0.85 | 0.85 | 0.85 | 0.85 | 0.85 | 0.95 | 0.75 | 0.65 | 0.85 | 0.85 |
| β | 0.27 | 0.27 | 0.27 | 0.27 | 0.27 | 0.27 | 0.27 | 0.27 | 0.27 | 0.27 | 0.37 | 0.23 |

**[Table 4]**

| | Comparative Examples | | | | | |
|---|---|---|---|---|---|---|
| | 1 | 2 | 3 | 4 | 5 | 6 |
| Polymer name | A-13 | A-14 | A-15 | A-16 | A-17 | A-18 |
| 1st peak weight average molecular weight (×10⁴) | 20 | 20 | 20 | 20 | 20 | 20 |
| Total weight average molecular weight (×10⁴) | 32 | 32 | 32 | 32 | 32 | 32 |
| Coupling rate (%) | 24 | 24 | 24 | 24 | 24 | 24 |
| Polymer (A1) content (%) | 22 | 22 | 22 | 22 | 22 | 22 |
| Bound styrene content (wt%) | 35 | 35 | 35 | 35 | 55 | 4 |
| Vinyl bond content (mol%) | 27 | 27 | 27 | 27 | 27 | 27 |
| θst (wt% in ST) | 40 | 4 | 10 | 10 | 45 | 0.1 |
| Hydrogenation ratio (%) | 85 | 85 | 98 | 50 | 85 | 85 |
| α | 0.85 | 0.85 | 0.98 | 0.5 | 0.85 | 0.85 |
| β | 0.27 | 0.27 | 0.27 | 0.27 | 0.27 | 0.27 |

### <Production and evaluation of polymer composition and cross-linked products (1)>

Each of the above-produced hydrogenated conjugated diene-based polymers A-1 to A-18 was blended with other components according to the formulations shown in Table 5. The resultant mixture was kneaded, to thereby prepare a polymer composition. Kneading was conducted in the following procedure. A first-stage kneading was performed by means of Plastomill (capacity: 250 mL) equipped with a temperaturecontroller under predetermined conditions (filling rate: 72% and rotation rate: 60 rpm). Specifically, a hydrogenated modified conjugated diene-based polymer (each of A-1 to A-18), silica, carbon black, a silane coupling agent, an extender oil, stearic acid, zinc oxide, and an antioxidant were mixed and kneaded, to thereby prepare a polymer composition A. Subsequently, a second-stage kneading was performed by cooling the above-prepared polymer composition A to room temperature and blending the resultant mixture with a vulcanization accelerator and sulfur. Through kneading, a polymer composition B was prepared. The thus-obtained polymer composition B was molded and vulcanized through vulcanization pressing at 160°C for a specific time, to thereby yield a cross-linked product (i.e., a vulcanized rubber).

Also, the processability, rolling resistance, mechanical strength, and wet grip performance of each cross-linked product were evaluated through the following procedures. Tables 6 and 7 show the results.

### (1) Processability:

A measurement sample was prepared from an unvulcanized rubber (polymer composition B). The Mooney viscosity of the sample was measured in accordance with JIS K6300. Viscosity measurement was performed by means of an L rotor under the conditions including a preliminary heating for 1 minute, a rotor operation for 4 minutes, and a temperature of 100°C. The measurement was evaluated as an index, with respect to the measurement of Comparative Example 1 as 100. An index of 110 or greater was rated as a score "A". An index of 90 or greater and less than 110 was rated as a score "B". An index of 80 or greater and less than 90 was rated as a score "C". An index less than 80 was rated as a score "D". The greater the index (i.e., the lower the Mooney viscosity), the more suitable the processability.

### (2) Rolling resistance (50°C tanδ):

The ratio of loss modulus G" to storage modulus G' (i.e., 50°C tanδ) of each vulcanized rubber measurement sample was measured by means of a shear-type dynamic spectrometer (product of TA Instruments) at an angular speed of 100 radians/second, 50°C, and a shearing strain of 3%. The measurement was evaluated as an index, with respect to the measurement of Comparative Example 1 as 100. An index of 110 or greater was rated as a score "A". An index of 90 or greater and less than 110 was rated as a score "B". An index of 80 or greater and less than 90 was rated as a score "C". An index less than 80 was rated as a score "D". The greater the index, the more suitable the rolling resistance.

### (3) Mechanical strength (TB*EB):

A measurement sample was prepared from a vulcanized rubber. The sample was subjected to a tensile test in accordance with JIS K6251: 2010. In the test, the test sample was a dumbbell No. 3 sample, and tensile stress at break (TB, unit: MPa) and elongation at break (EB, unit: %) were measured at room temperature. The greater the TB and EB, the greater the breaking strength (i.e., the more excellent the mechanical strength of the material). The mechanical strength was calculated by numerical expression (TB*EB)/2. The measurement was evaluated as an index, with respect to the measurement of Comparative Example 1 as 100. An index of 110 or greater was rated as a score "A". An index of 90 or greater and less than 110 was rated as a score "B". An index of 80 or greater and less than 90 was rated as a score "C". An index less than 80 was rated as a score "D". The greater the index, the higher the mechanical strength, which is the more suitable.

### (4) Wet grip performance (0°C tanδ):

Tangent loss at 0°C (tanδ (0°C)) of each vulcanized rubber measurement sample was measured by means of ARES-RDA (product of TA Instruments) at a shearing strain of 0.14%, an angular speed of 100 radians/second, and 0°C. The measurement was evaluated as an index, with respect to the measurement of Comparative Example 2 as 100. An index of 110 or greater was rated as a score "A". An index of 90 or greater and less than 110 was rated as a score "B". An index of 80 or greater and less than 90 was rated as a score "C". An index less than 80 was rated as a score "D". The greater the index, the more suitable the wet grip performance.

**[Table 5]**

| Formulations | (phr) |
|---|---|
| rubber component (hydrogenated conjugated diene-based polymer) | 100 |
| silica *1) | 38 |
| carbon black *2) | 37 |
| silane coupling agent *3) | 3.2 |
| extender oil *4) | 34 |
| stearic acid | 2.0 |
| zinc oxide | 3.0 |
| antioxidant *5) | 1.0 |
| vulcanization accelerator CZ *6) | 1.8 |
| vulcanization accelerator D *7) | 1.5 |
| sulfur | 1.5 |

The components shown in Table 5 are as follows.
*1) ZEOSIL 1165MP (product of Rhodia)
*2) SEAST 3 (product of Tokai Carbon Co., Ltd.)
*3) Si75 (product of Evonik)
*4) Process oil T-DAE (product of ENEOS)
*5) Ozonone 6C (product of Seiko Chemical Co., Ltd.)
*6) Nocceler CZ (product of Ouchi Sinko Chemical Industrial Co., Ltd.)
*7) Nocceler D (product of Ouchi Sinko Chemical Industrial Co., Ltd.)

**[Table 6]**

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Polymer | | A-1 | A-2 | A-3 | A-4 | A-5 | A-6 | A-7 | A-8 | A-9 | A-10 | A-11 | A-12 |
| Physical properties of formulation | Processability (Compund MV) | A | B | A | B | B | B | B | B | A | A | A | B |
| | Mechanical strength (TB*EB) | B | A | B | A | A | A | A | A | B | C | B | A |
| | Rolling resistance | A | A | B | A | B | A | B | B | A | A | B | A |
| | Wet grip performance | B | B | A | C | A | B | A | B | A | A | A | B |

**[Table 7]**

| | | Comparative Examples | | | | | |
|---|---|---|---|---|---|---|---|
| | | 1 | 2 | 3 | 4 | 5 | 6 |
| Polymer | | A-13 | A-14 | A-15 | A-16 | A-17 | A-18 |
| Physical properties of formulation | Processability (Compund MV) | B | C | B | C | B | D |
| | Mechanical strength (fB*EB) | D | B | C | D | A | C |
| | Rolling resistance | B | C | B | C | D | A |
| | Wet grip performance | A | B | B | A | A | D |

As shown in Table 6, according to the hydrogenated conjugated diene-based polymers of Examples 1 to 12, processability of the polymer composition, and mechanical strength, rolling resistance, and wet grip performance of the cross-linked products were successfully improved in a well-balanced manner. Among the Examples, Examples 1 to 3, 5 to 9, 11, and 12 were found to exhibit scores "A" or "B" in terms of all the four evaluated properties, indicating a well balance in various properties.

In contrast, as shown in Table 7, Comparative Example 1, in which the θst of the hydrogenated conjugated diene-based polymer was greater than 50 mass%, and Comparative Example 4, in which the α of the hydrogenated conjugated diene-based polymer was less than 0.6 mass%, were found to exhibit score "D" in terms of mechanical strength. Comparative Example 3, in which the θst of the hydrogenated conjugated diene-based polymer was 4 mass% or less, and Comparative Example 4, in which the α of the hydrogenated conjugated diene-based polymer was greater than 0.97 mass%, were inferior to Examples 1 to 12 from general aspects, although the evaluation results include no score "D". Also, Comparative Example 5, in which the bound styrene content was higher than 50 mass%, were found to exhibit score "D" in terms of rolling resistance. Comparative Example 6, in which the bound styrene content was lower than 5 mass%, was found to exhibit score "D" in terms of processability and wet grip performance.

### <Production and evaluation of polymer composition and cross-linked products (2)>

Each of the above-produced hydrogenated conjugated diene-based polymers A-1 to A-18 was blended with other components according to the formulations shown in Tables 8 to 11. The resultant mixture was kneaded, to thereby prepare a polymer composition. Kneading was conducted in the same manner as employed in Examples 1 to 12 and Comparative Examples 1 to 6.

In a manner similar to that employed in Examples 1 to 12 and Comparative Examples 1 to 6, processability, rolling resistance, mechanical strength, and wet grip performance were evaluated. Tables 8 to 11 show the results. In Tables 8 to 11, the symbol "-" denotes no use of the compound in the corresponding column.

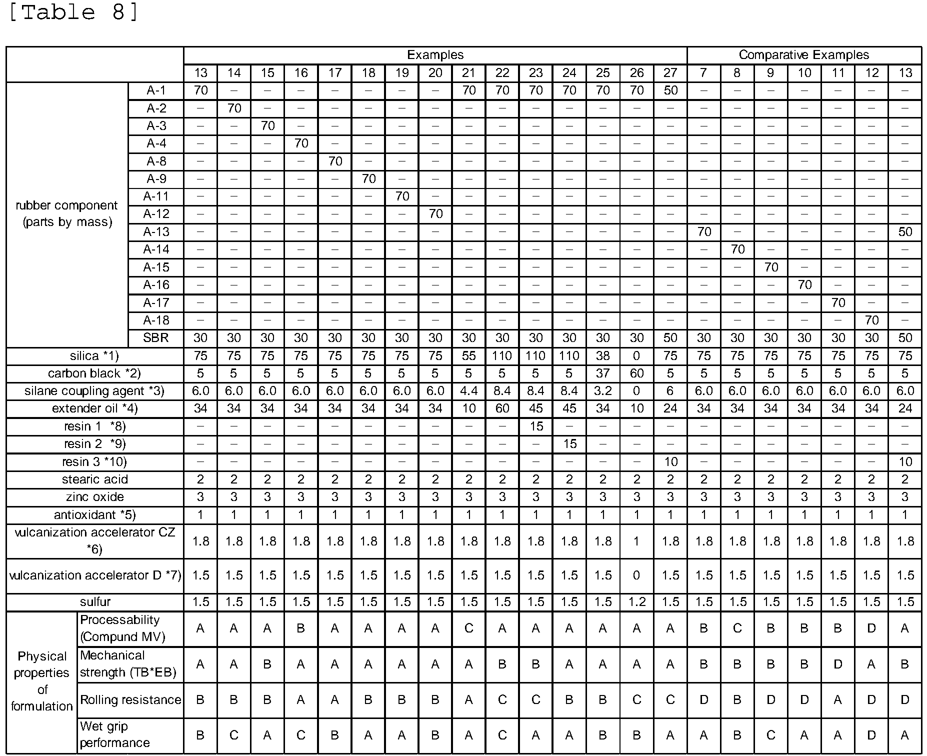

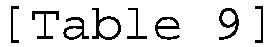

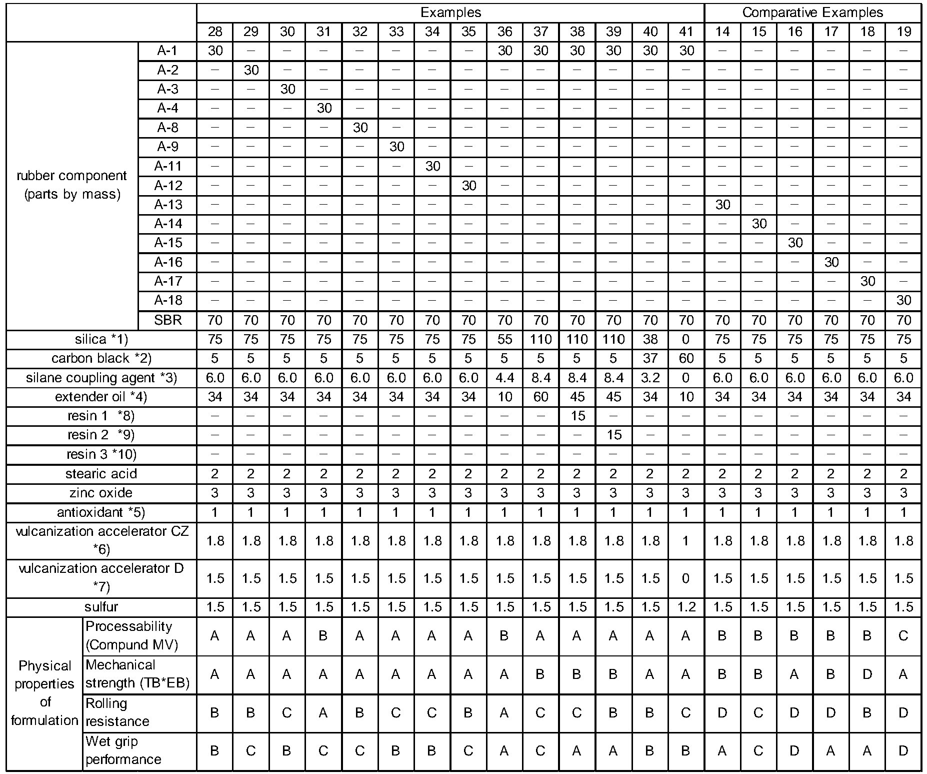

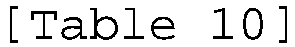

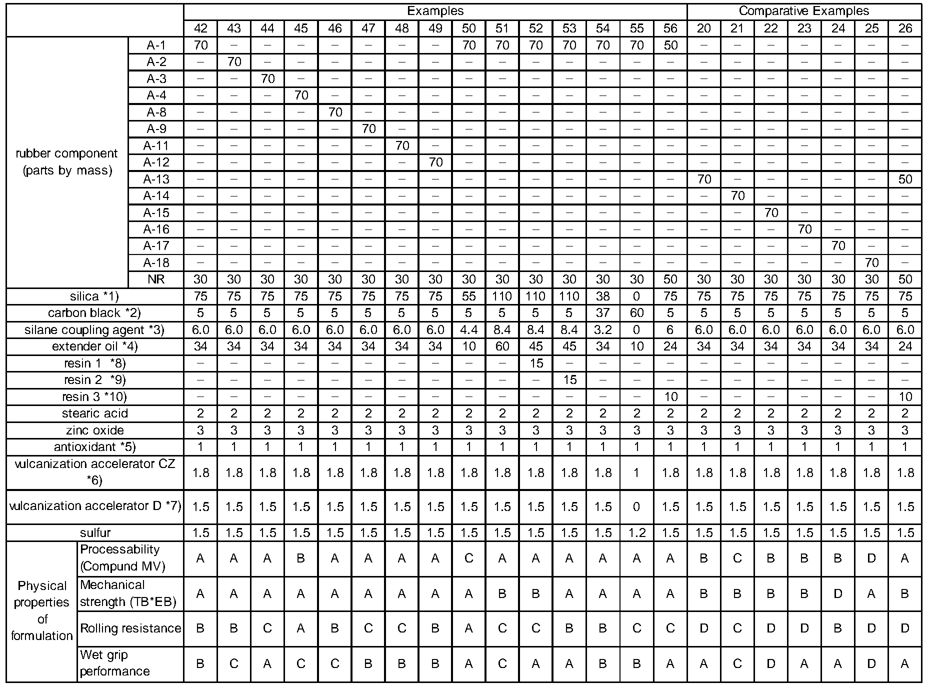

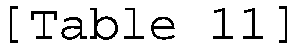

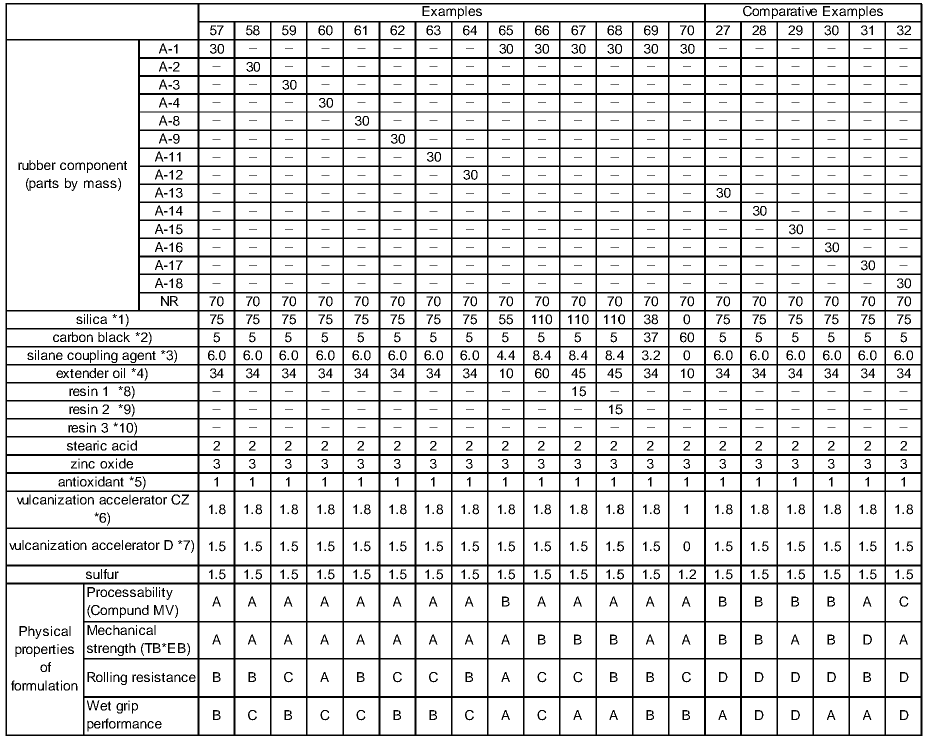

The components shown in Tables 8 to 11 are as follows.
*1) to *7) the same as in Table 5
*8) Resin 1: T-REZ PR802 (C5/C9-type resin) (product of ENEOS)
*9) Resin 2: T-REZ PR803 (hydrogenated DCPD/C9-type resin) (product of ENEOS)
*10) Resin 3: SYLVARES SA85 (α-methylstyrene-based resin) (product of Kraton)
SBR: HPR355R (product of ENOES Material)
NR: RSS#3

As shown in Tables 8 and 9, according to Examples 13 to 41 employing the hydrogenated conjugated diene-based polymers A-1 to A-12 produced in Examples 1 to 12, processability of the polymer composition, and rolling resistance, mechanical strength, and wet grip performance of the cross-linked products were successfully improved in a well-balanced manner, even in a system in which non-hydrogenated SBR was used in combination. In contrast, Comparative Examples 7 to 19, employing the hydrogenated conjugated diene-based polymers A-13 to A-18 produced in Comparative Examples 1 to 6, were found to exhibit no score "A" in terms of any evaluation item, or score "D" in terms of a certain evaluation item. Thus, Comparative Examples 7 to 19 were inferior to Examples 13 to 41 from general aspects.

Also, as shown in Tables 10 and 11, according to Examples 42 to 70 employing the hydrogenated conjugated diene-based polymers A-1 to A-12 produced in Examples 1 to 12, processability of the polymer composition, and rolling resistance, mechanical strength, and wet grip performance of the cross-linked products were successfully improved in a well-balanced manner, even in a system in which natural rubber was used in combination. In contrast, Comparative Examples 20 to 32, employing the hydrogenated conjugated diene-based polymers A-13 to A-18 produced in Comparative Examples 1 to 6, were found to exhibit no score "A" in terms of any evaluation item, or score "D" in terms of a certain evaluation item. Thus, Comparative Examples 20 to 32 were inferior to Examples 42 to 70 from general aspects.

## Claims

1. A conjugated diene-based polymer comprising a structural unit derived from butadiene and a structural unit derived from an aromatic vinyl compound,
wherein when the proportions by mole of a structural unit represented by formula (1), a structural unit represented by formula (2), a structural unit represented by formula (3), and a structural unit represented by formula (4): 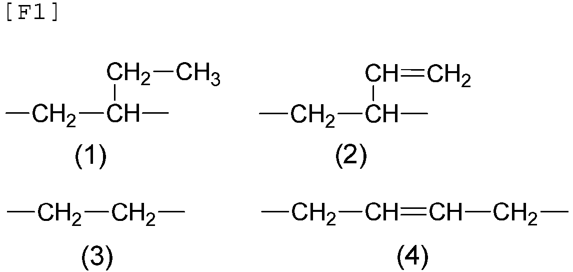 in the polymer, are represented by p, q, r, and s, respectively, the value α defined by numerical formula (i): $α = \left(p+\left(0.5\times r\right)\right) / \left(p+q+\left(0.5\times r\right)+s\right)$ (i), is 0.60 to 0.97;
Wherein the relative amount of the structural unit derived from the aromatic vinyl compound is 5 mass% to 50 mass%; and
wherein the value θst, calculated from a ¹H-NMR spectrum as measured in deuterated chloroform as a solvent and by numerical formula (ii): $θst = \left[\left(\sum \left(a\right) / \sum \left(a, b\right)\right)\times 2.5\right] \times 100$ (ii) (wherein Σ(a) represents an integral value in a chemical shift range of 6.00≤<6.89, and Σ(a,b) represents an integral value in a chemical shift range of 6.00≤σ≤8.00), is greater than 4 mass% and less than 27 mass%.

2. The conjugated diene-based polymer according to claim 1, comprising a functional group comprising at least one element selected from the group consisting of nitrogen, oxygen, phosphorus, silicon, and sulfur.

3. The conjugated diene-based polymer according to claim 1, comprising a polymer comprising a multi-branch structure with 4 or more molecular chains, in a relative amount of 15 mass% to 75 mass%.

4. The conjugated diene-based polymer according to claim 1, comprising the structural unit derived from an aromatic vinyl compound in a relative amount of 25 mass% to 50 mass%.

5. The conjugated diene-based polymer according to claim 1, wherein the value β represented by numerical formula (iii): $β = \left(p+q\right) / \left(p+q+\left(0.5\times r\right)+s\right)$ (iii); is 0.05 to 0.70.

6. A polymer composition comprising:
the conjugated diene-based polymer according to claim 1, and
an antioxidant.

7. The polymer composition according to claim 6, further comprising a resin.

8. The polymer composition according to claim 6, further comprising an extender oil.

9. The polymer composition according to claim 6, further comprising an inorganic filler.

10. The polymer composition according to claim 9, wherein the inorganic filler comprises silica, and wherein further comprising a silane coupling agent.

11. A cross-linked product formed by cross-linking of the polymer composition according to any one of claims 6 to 10.

12. A tire comprising a cap tread and a sidewall, wherein one or both of them is formed from a cross-linked product of the polymer composition according to any one of claims 6 to 10.
